(19) Europäisches Patentamt
European Patent Office
Office européen des brevets

(11) **EP 1 756 234 B1**

(12) **EUROPÄISCHE PATENTSCHRIFT**

(45) Veröffentlichungstag und Bekanntmachung des Hinweises auf die Patenterteilung:
**10.09.2008   Patentblatt 2008/37**

(21) Anmeldenummer: **05750476.3**

(22) Anmeldetag: **01.06.2005**

(51) Int Cl.:
*C09C 1/64* (2006.01)     *C09D 5/38* (2006.01)

(86) Internationale Anmeldenummer:
**PCT/EP2005/005879**

(87) Internationale Veröffentlichungsnummer:
**WO 2005/118722 (15.12.2005 Gazette 2005/50)**

(54) **WÄSSRIGE BESCHICHTUNGSZUSAMMENSETZUNG MIT KORROSIONSSTABILEN DÜNNEN DECKENDEN ALUMINIUMPIGMENTEN, VERFAHREN ZU DEREN HERSTELLUNG UND VERWENDUNG DERSELBEN**

AQUEOUS COATING COMPOSITION WITH CORROSION RESISTANT THIN-COAT ALUMINIUM PIGMENTS METHOD FOR PRODUCTION AND USE THEROF

COMPOSITION DE REVETEMENT AQUEUSE A PIGMENTS D'ALUMINIUM COUVRANTS, MINCES ET RESISTANTS A LA CORROSION, PROCEDE DE PRODUCTION ET UTILISATION DE LADITE COMPOSITION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **01.06.2004   DE 102004026955**

(43) Veröffentlichungstag der Anmeldung:
**28.02.2007   Patentblatt 2007/09**

(73) Patentinhaber: **Eckart GmbH**
**90763 Fürth (DE)**

(72) Erfinder:
• **MAUL, Robert**
  **90610 Winkelhaid (DE)**
• **TRUMMER, Stefan**
  **90480 Nürnberg (DE)**

(74) Vertreter: **Walcher, Armin**
**Louis, Pöhlau, Lohrentz**
**Postfach 3055**
**90014 Nürnberg (DE)**

(56) Entgegenhaltungen:
**EP-A- 0 451 785**          **WO-A-01/81483**
**WO-A-20/04087816**      **WO-A-20/04092261**
**US-A- 2 885 366**

• **A. KIEHL, K. GREIWE: "Encapsulated aluminium pigments" PROGRESS IN ORGANIC COATING, Bd. 37, 1999, Seiten 179-183, XP002351232 in der Anmeldung erwähnt**

## Beschreibung

Die vorliegende Erfindung betrifft eine wässrige Beschichtungszusammensetzung, die mit einer anorganischen Korrosionsschutzschicht versehene Aluminiumpigmente enthält. Weiterhin betrifft die Erfindung ein Verfahren zur Herstellung einer solchen Beschichtungszusammensetzung und die Verwendung der Beschichtungszusammensetzung sowie mit der Beschichtungszusammensetzung beschichtete Gegenstände.

Wässrige Beschichtungszusammensetzungen mit Metalliceffekt sind seit vielen Jahren bekannt. Der Metalliceffekt kommt durch plättchenförmige Metallpigmente zustande. Die korrosionsempfindlichen Aluminiumpigmente müssen bei wässrigen Beschichtungszusammensetzungen mit einer schützenden Beschichtung versehen werden, um eine Oxidation der Aluminiumpigmente unter Wasserstoffbildung zu vermeiden.

Eine wichtige Eigenschaft metallischer Coatings ist der hohe Glanz. Glanz ist u. a. auch eine physiologisch und psychologisch bedingte Größe, jedoch lässt sich nach der DIN 67 530 das "Glanzvermögen" einer ebenen Oberfläche durch Reflektometerwerte erfassen. Gemessen wird die Reflexion im Glanzwinkel bezogen auf einen Standard (i.d.R. eine schwarze Spiegelglasplatte). Nach dieser Norm werden hochglänzende Proben (Reflektometerwert > 70) unter einem Einfall- bzw. Abstrahlwinkel von 20° und mittelglänzende Oberflächen bei 60° gemessen. Voraussetzung für einen guten Glanz von metallischen Coatings ist ebenfalls eine möglichst gute planparallele Orientierung der plättchenförmigen Pigmente im Anwendungsmedium.

Die brillantesten Aluminiumpigmente mit höchstem Glanz und Flop sind derzeit zwei Klassen zuzuordnen: zum einen so genannte "Silberdollarpigmente", die durch Nassvermahlung von Aluminiumgrieß hergestellt werden, und zum anderen sogenannte "PVD-Pigmente". Silberdollarpigmente zeichnen sich im Vergleich zu Metallpigmenten aus der Zerkleinerungsmahlung durch relativ runde Form und relativ glatte Oberfläche aus.

Eine Beschichtungszusammensetzung, die Silberdollaraluminiumpigmente enthält, ist beispielsweise in der DE 101 00 195 A1 offenbart. Hier ist in der Beschichtungszusammensetzung ein neutralisierendes Gemisch aus mindestens zwei Fettsäuren vorhanden. Diese Beschichtungszusammensetzung soll nach der Applikation eine deutlich geringere Neigung zur Bildung von "Wolken" aufweisen.

Durch Nassvermahlung hergestellte Aluminiumpigmente mit hohem Reflektionsgrad und hoher Deckung werden beispielsweise in der EP 0 451 785 B2 beschrieben. Die Pigmente werden charakterisiert durch Wasser-Bedeckungsgrade (Spreitwert) von 2,5 - 5,0 $m^2/g$, einen Rauwert von 2,0 und weniger und einen Formfaktor $d_{50}/h$ von 90 und mehr. Aus den Beispielen der EP 0 451 785 B2 sind Formfaktoren bis maximal 140 bekannt. Hier sind jedoch keine wässrigen Beschichtungszusammensetzungen beschrieben.

EP1621586 A offenbart plättchenförmige Aluminiumpigmente, die durch Vermahlen von Aluminiumpulver in einem organischen Lösungsmittel mit einer durchschnittlichen Dicke im Bereich von 25 bis 80 nm erhalten werden. Diese sehr dünnen, ultrafeinen Aluminiumplättchen werden in eine Druckfarbenzusammensetzung eingesetzt, bestehend u.a. aus einem Lösungsmittel und einem Bindemittel. Bei der Verwendung von Wasser als Lösungsmittel ist das Pigment mit einem Harz oder mit einer Phosphorsäureverbindung zu beschichten.

EP305560 A offenbart Aluminiumpigmente, deren Korrosionsschutzschicht aus einer Mischung von Phosphat- und Vanadationen besteht. Hierbei wird das Aluminiumpigment in eine stark verdünnte Lösung aus Phosphat- und Vanadationen eingetaucht oder mit dieser Lösung besprüht, so daß korrosionsgeschützte Aluminiumpigmente mit einem sehr dünnen Phosphat-Vanadat-Film erhalten werden.

In der WO 01/81483 A1 ist eine Pigmentpräparation, die mit einer Silizium-Sauerstoff-Matrix überzogene Aluminiumpigmente und ein Carboxylgruppenhaltiges Bindemittel mit einer Säurezahl von 10 bis 100 mg KOH/g enthält, beschrieben. Die hier verwendeten Aluminiumpigmente werden nicht in ihrer Dickencharakteristik beschrieben. Üblicherweise sind zum damaligen Zeitpunkt jedoch Pigmente mit Schichtdicken über 300 nm im Handel gewesen.

Bei PVD-Pigmenten werden extrem dünne (Dicken: 20 bis 50 nm) Aluminiumpigmente hergestellt. Die Dickenverteilung dieser Pigmente ist äußerst gering. Bei diesem Verfahren wird Aluminium im Ultrahochvakuum auf eine mit einem Ablösefilm ("release-coat") versehene Trägerfolie aufgedampft. Bei diesem Ablösefilm handelt es sich in der Regel um Polymere. Anschließend wird das aufgedampfte Aluminium - soweit möglich - in einem Lösemittel von der Trägerfolie getrennt und die Metallfolie mechanisch oder durch Ultraschall zerkleinert. Die Herstellung von PVD-Pigmenten ist beispielsweise in J. Seubert und A. Fetz, "PVD Aluminium Pigments: Superior Brillance for Coatings and Graphic Arts", Coatings Journal, Bd. 84, A6 225-264, Juli 2001, Seiten 240-245 beschrieben.

Diese PVD-Pigmente weisen aufgrund ihrer extremen Dünnheit ein hervorragendes Deckvermögen auf. Die dünnen Pigmente sind so flexibel, daß sie sich regelrecht an ihrem Untergrund "anschmiegen". Daher sollten sie zur Entfaltung ihrer optischen Möglichkeiten auf einem glatten Untergrund appliziert werden.

Beschichtungszusammensetzungen, die PVD-Pigmente in passivierter Form enthalten, ermöglichen Coatings mit einem höheren Glanz und dem visuell wahrnehmbaren Erscheinungsbild eines geschlossenen Metallfilms. Jedoch sind derartige Beschichtungszusammensetzungen aufgrund der teuren PVD-Pigmente ebenfalls entsprechend teuer.

Weiterhin ist von Nachteil, daß der Relese-coat kaum vollständig von den Pigmentteilchen entfernt werden kann. Dieser anhaftende Polymerfilm kann jedoch zu Nachteilen führen. Dies macht sich beispielsweise in der Ausbildung von Agglomeraten bemerkbar, die den gewünschten dekorativen Effekt völlig zunichte machen. Derartige Agglomerate führen zu Stippenbildung und erhöhen die Neigung der Wolkenbildung.

Insbesondere jedoch können derartige polymere Anhaftungen nachteilig stören, wenn man die Aluminiumpigmente nach ihrer Herstellung mit chemischen Schutzüberzügen, wie sie in der DE 196 35 085 beschrieben sind, versieht, um sie korrosionsbeständig zu machen.

Ein weiterer Nachteil derartiger PVD-Pigmente ist ihre schwere Handhabbarkeit in wässrigen Beschichtungszusammensetzungen. Aufgrund ihrer äußerst hohen und glatten spezifischen Oberfläche ist die Agglomerationsneigung sehr stark. Ferner lassen sich Beschichtungszusammensetzungen, die diese Pigmente enthalten, relativ schwer applizieren. Gleichmäßig aussehende Automobillackierungen werden beispielsweise nur mittels Handlackierungen in vielen dünnschichtigen Lackierschritten erreicht. Ein derart empfindliches Applikationsverhalten steht einer Automatisierung, wie sie für Beschichtungszusammensetzungen mit konventionellen Aluminiumpigmenten üblich ist, im Wege.

Wässrige Beschichtungszusammensetzungen, die konventionell hergestellte Pigmente - in Form von Silberdollar oder "Cornflake" - in passivierter Form enthalten, sind geeignet, um metallische Coatings herzustellen. Die hiermit erzielbaren Effekte weisen einen gewissen metallischen Glanz und Flop auf. Stets ist das visuell wahrnehmbare Erscheinungsbild jedoch so, dass der Beschichtung eine gewisse Körnigkeit anzusehen ist. Auch müssen aufgrund der Dicke dieser herkömmlichen Pigmente (> 300 nm) die Pigmentierungshöhen relativ hoch gewählt sein, um eine vollständige Deckung zu gewährleisten.

Zudem neigen viele wässrige Beschichtungszusammensetzungen mit Aluminiumpigmenten nach der Applikation, insbesondere nach der Spritzung, zur Bildung sogenannter "Wolken". Dies macht sich in der Ausbildung unterschiedlich heller und dunkler Schattierungen in der Lackierung bemerkbar und wirkt sich äußerst störend auf die Effektbildung des Effektlackes aus.

Derartige Wolkenbildungen sind besonders störend, wenn die Metallicbeschichtung an sich schon einen äußerst hochwertigen Eindruck vermittelt, d.h. verbunden ist mit hohem Glanz und Flop.

Die Bildung von Wolken kommt durch eine ungleichmäßige Orientierung der Aluminiumpigmente, insbesondere durch praktisch senkrecht stehende Aluminiumpigmente im Überzug zustande.

Aufgabe der vorliegenden Erfindung ist es daher, eine wässrige Beschichtungszusammensetzung bereitzustellen, die es ermöglicht, Metallicüberzüge mit einem hohen Glanz und dem Aussehen eines im wesentlichen strukturlosen, geschlossenen flüssigen Metallfilms bei geringen Pigmentierungshöhen an Metallpigmenten herzustellen. Weiterhin sollte der Metallicüberzug eine verminderte Wolkenbildung und eine gegenüber dem Stand der Technik verbesserte Chemikalienbeständigkeit in Einschichtüberzügen aufweisen.

Eine weitere Aufgabe der Erfindung ist es, eine wässrige Beschichtungszusammensetzung bereitzustellen, welche Metallpigmente enthält, die in einem kostengünstigeren Verfahren verglichen mit dem aufwendigen PVD-Herstellungsverfahren hergestellt werden können. Des weiteren soll sich die wässrige Beschichtungszusammensetzung einfacher applizieren lassen als eine wässrige Beschichtungszusammensetzung, die PVD-Pigmente enthält.

Die Aufgabe wird gelöst durch die Bereitstellung einer wässrigen Beschichtungszusammensetzung, die wenigstens ein mit Wasser kompatibles filmbildendes Mittel und mit wenigstens einer anorganischen Korrosionsschutzschicht versehene Aluminiumpigmente enthält, wobei die Dicke der mit wenigstens einer anorganischen Korrosionsschutzschicht versehenen Aluminiumpigmente im Mittel 50-90 nm beträgt, wobei die anorganische Korrosionsschutzschicht eine $SiO_2$-schicht mit einer Schichtdicke von 3-20nm ist.

Bevorzugte Weiterbildungen der erfindungsgemäßen Beschichtungszusammensetzung sind in den Unteransprüchen 2 bis 16 angegeben.

Die der Erfindung zugrundeliegende Aufgabe wird weiterhin durch ein Verfahren gemäß Anspruch 17 zur Herstellung einer Beschichtungszusammensetzung gelöst, das folgende Schritte umfasst:

(a) Verformen von Aluminiumpartikeln unter Verwendung eines Mahlwerks in Gegenwart von Flüssigphase und Schmierstoffen sowie Mahlkörpern, wobei die Mahlkörper ein Einzelgewicht von 2 bis 13 mg aufweisen, über einen Zeitraum von wenigstens 15 Stunden zu Aluminiumpigmenten,

(b) Nasschemisches Beschichten der im Schritt (a) hergestellten Aluminiumpigmente mit wenigstens eine $SiO_2$-schicht unter Verwendung eines Sol-Gel-Verfahrens,

(c) Vermengen der im Schritt (b) beschichteten Aluminiumpigmente mit wenigstens einem filmbildenden Mittel und einer Flüssigphase unter Bereitstellung der Beschichtungszusammensetzung.

Bevorzugte Weiterbildungen des erfindungsgemäßen Verfahrens sind in den Unteransprüchen 18 bis 23 angegeben.

Die der Erfindung zugrundeliegende Aufgabe wird weiterhin durch die Verwendung der erfindungsgemäßen Beschichtungszusammensetzung in hochglänzenden Coatings, wie Automobillacken, Reparaturlackierungen, Industrielackierungen, Lackierungen von Kunststoffen, Holz oder Glas gelöst.

Die Aufgabe wird ferner durch einen mit der erfindungsgemäßen Beschichtungszusammensetzung beschichteten Gegenstand gelöst.

Die bei der Erfindung verwendeten Aluminiumpigmente sind keine PVD-Pigmente, d.h. keine über ein PVD-Verfahren (Physical Vapour Deposition-Verfahren) hergestellte Aluminiumpigmente, sondern durch mechanische Verformung hergestellte Aluminiumpigmente.

Aluminiumpigmente sind Effektpigmente und zeichnen sich durch ihr einzigartiges metallisches Aussehen und ihre hohe Deckkraft aus. Aufgrund der plättchenförmigen Struktur dieser Effektpigmente orientieren sie sich im Anwendungsmedium parallel zum Substrat und bewirken durch eine Kombination vieler einzelner Spiegelchen einen metallischen Effekt. Dieser metallische Effekt ist insbesondere in Naßlacken sehr stark ausgeprägt. Dabei handelt es sich bei Volltonlackierungen um einen vom Beobachtungs- und/oder Einfallswinkel abhängigen Helligkeitseffekt, der auch als "Flop" bezeichnet wird. Ein guter Flop wird von vielen Eigenschaften der Pigmente beeinflusst: so spielen ihre Orientierung, ihre Größe und Größenverteilung, ihre Oberflächentextur (Rauheit) und die Kantentextur eine wichtige Rolle.

Die treibende Kraft für eine planparallele Orientierung der Metallpigmente, die auch als Flakes bezeichnet werden, ist - neben grenzflächenchemischen Unverträglichkeiten der Aluminiumpigmente zum Bindemittelsystem - vor allem der Formfaktor der Pigmente. Unter dem Formfaktor versteht man das Verhältnis von Längsausdehnung d zur Dicke h der Pigmente. Die Längsausdehnung wird vor allem anhand von Laserbeugungsmethoden bestimmt. Dabei wird in der Regel der $d_{50}$-Wert der Summendurchgangskurve herangezogen.

Eine gestörte Orientierung der Aluminiumpigmente im Überzug führt zur Bildung sogenannter "Wolken", d.h. zu störenden Hell-Dunkel-Schattierungen.

Da die Längsausdehnung der Aluminiumpigmente stark vom jeweiligen Anwendungszweck abhängig ist, kann ein hoher Formfaktor und damit eine möglichst gute Orientierung vor allem über die Dicke der Pigmente erreicht werden. Dünne Pigmente orientieren sich besser und haben daher auch einen höheren Glanz und Flop. Zudem ist die Deckfähigkeit deutlich verbessert.

Wasserlacke sind als umweltfreundliche Systeme immer weiter im Markt verbreitet. Die Aluminiumpigmente müssen in diesem mit einer passivierenden Schutzschicht versehen sein. Andernfalls führt die Reaktion mit Wasser zur Oxidation des Pigmentes - und damit einhergehend dem Verlust der Effekteigenschaften - sowie zur Bildung von Wasserstoff (Gasung). Dieses ist schon aus sicherheitstechnischen Gründen gefährlich.

Es sind verschiedene Verfahren zur Passivierung von Aluminiumpigmenten bekannt. Am wirksamsten sind die Chromatierung **(**EP 0 259 592**)** und eine $SiO_2$-Beschichtung **(**US 2,885,366**,** US 3,954,496**,** EP 0 678 561**,** DE 195 01 307**,** EP 0 708 155**).**

Bei anderen Verfahren werden die Aluminiumpigmente mit Vanadium- **(**EP 0 104 075**)** oder mit Molybdänverbindungen **(**US 5,480,481 **und** EP 0 583 919**)** oder deren Kombination **(**US 4,693,469**)** behandelt. Als weniger effizient haben sich Beschichtungen mit Kunststoffharzen **(**EP 0 477 433**)** herausgestellt. Auch die Behandlung mit phosphororganischen Verbindungen wie Phosphonsäuren oder Phosphorsäuren **(**US 4,808,231**)** oder Phosphiten **(**US 5,215,579**)** und deren Ester ist weit weniger effizient. Hiermit werden Gasungsstabilitäten in relativ milden Wasserlacksystemen erzeugt, nicht jedoch in sehr aggressiven Systemen.

Bei der Verwendung derart passivierter Aluminiumpigmente in wässrigen Beschichtungszusammensetzungen spielt jedoch nicht nur die Gasungsstabilität eine Rolle. Die Pigmentoberfläche muß auch nach der Passivierung gut mit dem Bindemittel und dem Lösemittel der Beschichtungszusammensetzung benetzbar sein.

Die Korrosionsstabilität der passivierten Aluminiumpigmente spielt zunächst nur eine Rolle in bezug auf die Gasungsstabilität in der wässrigen Beschichtungszusammensetzung. Bei vielen Applikationen - wie beispielsweise im größten Marktsegment, dem Automobillack - wird der beschichtete Gegenstand noch mit einer zusätzlichen Klarlackschicht versehen. Diese sorgt aufgrund ihrer Barrierewirkung für einen ausreichenden Korrosionsschutz der Aluminiumpigmente innerhalb der Basislackschicht.

Von zunehmenden Interesse ist jedoch eine wässrige Beschichtungszusammensetzung, die auch in einer einschichtigen Beschichtung ohne zusätzlichen Klarlack einen Korrosionsschutz für die Aluminiumpigmente ergibt. Als Anwendungsfelder sind hier die Consumerelektronik, Beschichtungen von Handys und die Automobilindustrie zu nennen.

Bei der erfindungsgemäßen Beschichtungszusammensetzung enthält die passivierende anorganische Korrosionsschutzschicht des Aluminiumpigmentes Siliziumdioxid.

Der Anteil der Korrosionsschutzschicht beträgt vorzugsweise weniger als 20 Gew.-%, bezogen auf das Gesamtgewicht der mit der Korrosionsschutzschicht versehenen Aluminiumpigmente. Um eine ausreichende Passivierung der Aluminiumpigmente zu erhalten, reicht eine Korrosionsschutzschicht aus. Selbstverständlich können aber auch mehr als eine Korrosionsschutzschicht auf die Aluminiumpigmente, beispielsweise zwei oder drei aufgebracht werden. Um jedoch die mittlere Dicke der Aluminiumpigmente nicht unnötig zu erhöhen, wird vorzugsweise nur eine Korrosionsschutzschicht aufgebracht.

Bevorzugt ist hierbei eine Korrosionsschutzschicht aus Siliziumdioxid, welche nach Sol-Gel-Verfahren auf die Aluminiumpigmente aufgebracht wird. Weiterhin bevorzugt ist die Siliziumdioxid-Oberfläche mit organofunktionellen Silanen belegt. Eine Oberflächenmodifizierung mit organofunktionellen Silanen verleiht dem Effektpigment gute und steuerbare Benetzungseigenschaften zum Bindemittel.

Somit erlaubt die erfindungsgemäße Beschichtungszusammensetzung die Einbindung oder Einbettung der äußerst dünnen Aluminiumpigmente in eine Lack- oder Farbschicht. Neben der die Aluminiumpigmente umhüllenden Korrosionsschutzschicht wird über die Einbettung in die Lack- oder Farbschicht ein weiterer Korrosionsschutz der Aluminiumpigmente erreicht. Die auf der Oberfläche der $SiO_2$-Schutzschicht aufgebrachten organofunktionellen Gruppen erlauben nämlich eine Umsetzung mit Bindemittelkomponenten und führen zu einer kovalenten Bindung der Aluminiumpigmente in der Lack- oder Farbschicht. Aufgrund der chemischen Fixierung in der Lack- bzw. Farbschicht ist es nicht mehr erforderlich, eine weitere Schutzschicht, beispielsweise eine Klarlackschicht, aufzubringen.

Darüber hinaus hat sich überraschenderweise herausgestellt, daß eine unter Verwendung des erfindungsgemäßen Beschichtungsmittels hergestellte Lack- oder Farbschicht auch ohne nachfolgende Klarlackschicht einen außergewöhnlichen Glanz sowie eine ausgezeichnete Chemikalienbeständigkeit aufweist. Bei herkömmlichen Lackierungen muß auf den Pigment-haltigen Basislack zwingend eine Klarlackschicht aufgebracht werden, um den gewünschten Glanz zu erhalten.

Die Menge an $SiO_2$, die für eine vollständige Umhüllung des Aluminiumpigmentes verwendet wird, um Gasungsstabilität zu erlangen, sollte möglichst niedrig sein. Hohe $SiO_2$-Mengen verringern die Deckkraft des Effektpigmentes und können die optischen Eigenschaften nachteilig beeinflussen.

Die Menge an $SiO_2$ der beschichteten Aluminiumpigmente für die erfindungsgemäßen Beschichtungszusammensetzungen liegt vorzugsweise in einem Bereich von 2 bis 20 Gew-%, bevorzugt von 3 bis 15 Gew-% und besonders bevorzugt von 4 bis 10 Gew-%, jeweils bezogen auf das Gewicht des gesamten Effektpigmentes in trockener Form.

Abhängig von der spezifischen Oberfläche des Aluminiumpigmentes ergeben sich für diese Gehalte an $SiO_2$ üblicherweise Schichtdicken der $SiO_2$-Schicht von 3 bis 20 nm.

Zur Erreichung hoch glänzender Coatings mit dem optischen Effekt eines im wesentlichen strukturlosen, vorzugsweise strukturlosen, geschlossenen Flüssigmetallfilmes ist es unerläßlich, sehr dünne Aluminiumpigmente zu verwenden. Die mittlere Schichtdicke der mit einer anorganischen Korrosionsschutzschicht versehenen Aluminiumpigmente in der erfindungsgemäßen Beschichtungszusammensetzung beträgt im Mittel 50 bis 90 nm, weiter bevorzugt 60 bis 90 nm, besonders bevorzugt 70 bis 90 nm und ganz besonders bevorzugt 75 bis 90 nm.

Unterhalb von 50 nm Gesamtschichtdicke sind die Aluminiumpigmente derart dünn, daß sie bereits ihre optische Opazität verlieren können, d.h. ihre Deckkraft nimmt in erheblichem Maße ab. Oberhalb einer Gesamtschichtdicke von 160 nm werden die gewünschten optischen Eigenschaften nicht mehr erreicht.

Hierbei ist zu beachten, das die Schichtdicke der Schutzschicht zweimal in die Gesamtschichtdicke des Pigmentes eingeht. So beträgt beispielsweise bei einer Schichtdicke von $SiO_2$ von 20 nm und einer Gesamtschichtdicke des beschichteten Pigmentes von 160 nm die Schichtdicke des reinen Aluminiumpigmentes 120 nm.

Die Schichtdicke der Aluminiumpigmente ohne aufgebrachte anorganische Korrosionsschicht liegt vorzugsweise in einem Bereich von 30 nm bis 154 nm, weiter bevorzugt von 50 nm bis 140 nm, noch weiter bevorzugt von 60 nm bis 120 nm. Als sehr geeignet hat sich eine Schichtdicke von 70 bis 100 nm erwiesen.

Es wird vermutet, daß der optische Effekt eines geschlossenen Metallfilmes, der den visuellen Eindruck eines im wesentlichen strukturlosen, vorzugsweise strukturlosen, Metallfilms hervorruft, daher kommt, daß die Effektpigmente sich nach der Applikation in dichtester Weise übereinander stapeln. Aufgrund ihrer Dünnheit können sie sich sehr gut übereinander stapeln, ohne daß es dabei zu Problemen wie Glanzschleier (Haze) kommt. Ein derartiges Verhalten ist von sehr dünnen, nach PVD-Verfahren hergestellten Aluminiumpigmenten bekannt. Derartige Pigmente schmiegen sich völlig an ihren Untergrund an.

Überraschenderweise zeigte sich ein ähnlich ausgeprägtes Verhalten auch bei durch mechanische Verformung hergestellte, sehr dünn ausgewalzte Aluminiumpigmente, die anschließend noch mit einer anorganischen Korrosionsschutzschicht versehen wurden.

Dies ist völlig unerwartet, da beispielsweise aus A. Kiehl and K. Greiwe, "Encapsulated Aluminium Pigments", Progress in Organic Coatings 37 (1999), S. 179 bekannt ist, daß anorganische $SiO_2$-Schichten aufgrund ihrer Härte und Festigkeit Aluminiumpigmenten eine hohe Scherbeständigkeit verleihen. So wäre zu erwarten gewesen, daß die Flexibilität der Aluminiumpigmente derart beeinträchtigt würde, daß ein "Anschmiegen" mit $SiO_2$ beschichteter Aluminiumpigmente aneinander nicht mehr möglich sein sollte. Überraschenderweise wird auch durch die nicht unbeträchtliche Erhöhung der Gesamtschichtdicke des Pigmentes durch die anorganische Korrosionsschicht innerhalb der angegebenen Grenzen der optische Effekt nicht bzw. nicht wesentlich beeinträchtigt.

Als anorganische Korrosionsschutzschicht wird weiterhin bevorzugt eine Mischschicht aus Aluminium- und Chromoxid verwendet. Diese Mischschicht bildet sich nach einem als Chromatierverfahren bekannten Prozeß aus und stellt einen außerordentlich effektiven Korrosionsschutz dar. Die Herstellung derartiger Pigmente ist in der EP 0 259 592 beschrieben, die hiermit unter Bezugnahme aufgenommen wird.

Bei einer bevorzugten erfindungsgemäßen Weiterbildung wird das Aluminiumpigment nach der Verformung einer nasschemischen Oxidation unterworfen. Diese ist an sich in der EP 0 848 735 beschrieben, die hiermit unter Bezugnahme aufgenommen wird. Durch die Oxidation bildet sich eine Aluminiumoxid/-hydroxidschicht, die dem Pigment passivierende Eigenschaften verleiht. Zudem führt diese Behandlung der Aluminiumflakes zu einer Färbung im gelblich-goldenen Farbbereich.

Die Bestimmung der mittleren Schichtdicke beschichteter Aluminiumpigmente, die Bestandteil einer Beschichtungszusammensetzung ist, kann durch zwei Verfahren erfolgen. Hier ist zum einen die Spreitwertmethode und zum anderen die Dickenbestimmung durch rasterelektronenmikroskopische Aufnahmen anhand von Querschliffen von Spritzapplikationen der Beschichtungszusammensetzung zu nennen. Bei letzterem Verfahren kann - bei geeigneter Querschliffzubereitung - auch die Schichtdicke des Aluminiumkerns und der Korrosionsschutzschicht unterschieden werden. Dabei wird bei der Probenpräparation auf möglichst gleichmäßige parallele Orientierung der Pigmente zueinander geachtet, um einen signifikanten Fehler bei der Pigmentdickenmessung zu vermeiden.

Die Spreitwertmethode ist seit langem zur Dickenbestimmung von Aluminiumpigmenten bekannt. Die DIN 55923 gibt eine Vorschrift zur Messung des Wasserbedeckungsgrades (Spreitung) von "leafing"-Pigmenten an. Ihre Anwendung setzt voraus, das die Aluminiumpigmente in der Beschichtungszusammensetzung weitgehend isoliert werden. Hierzu wird die Beschichtungszusammensetzung mit einem organischen Lösemittel, wie beispielsweise Aceton oder Ethylacetat im Mengenverhältnis 1:1 gemischt und einer Zentrifugation ausgesetzt (1000 U/min für 5 min). Dabei sedimentieren die Aluminiumpigmente und der Überstand wird dekantiert. Die sedimentierten Aluminiumpigmente werden in dem 10-fachen Gewicht an Lösemittel redispergiert, erneuert zentrifugiert und der Überstand abdekantiert. Dieser Vorgang wird 10 bis 20-mal wiederholt. Danach sind die Aluminiumpigmente weitgehend vom filmbildenden Mittel und anderen nicht flüchtigen Komponenten der Beschichtungszusammensetzung getrennt. Anschließend werden sie in einer 10 %-igen Stearinsäurelösung in Testbenzin dispergiert und 15 min lang gerührt. Dann werden sie von der Lösung durch Filtration getrennt und getrocknet. Durch diese Vorgehensweise wird Stearinsäure auf den Pigmenten adsorbiert, was diesen "leafing"-Eigenschaften verleiht.

Anschließend wird eine definierte Einwaage derart behandelter Aluminiumpigmente in einem leicht flüchtigen organischen Lösemittel auf eine Wasseroberfläche in einer Wanne aufgegeben. Die Pigmente spreiten auf der Wasseroberfläche und bilden einen silbernen Metallfilm. Durch Rühren mit einem Glasstab werden sie zu einem gleichmäßigen "wolkenlosen" Metallfilm verteilt. Anschließend wird der Film durch zwei Lineale zusammengedrückt, bis er erste Falten aufweist. Dann wird der Film wieder soweit entspannt, bis die Falten verschwinden. Die vom Metallfilm bedeckte Fläche wird ausgemessen und anhand der Einwaage des Pigmentes als Spreitwert in cm$^2$/g (oder auch in m$^2$/g) angegeben.

Bei dieser Methode wird unterstellt, das sich die Metallpigmente zumindest im Mittel im Film einzeln nebeneinander anordnen und mithin in einer einzigen "Monolage" Pigment vorliegen.

Anhand dieses Spreitwertes errechnet sich die mittlere Dicke h in nm der Pigmente nach der folgenden Formel:

$$h = \frac{10^7 \, (nm/cm)}{\rho(g/cm^3) * Spreitwert(cm^2/g)}$$

wobei $\rho$ die physikalische Reindichte des mit Stearinsäure adsorbierten Pigmentes ist. Hier misst man gewöhnlich einen Wert von ca. 2,5 g/cm$^3$.

Bei der Verwendung der Rasterelektronenmikroskopie zur Dickenbestimmung wird zunächst eine Applikation der Beschichtungszusammensetzung erstellt und diese ausgehärtet. Anschließend wird ein Querschliff, beispielsweise mit einem Mikrotom, angefertigt. Der Querschliff wird vorsichtig poliert. Als Poliermittel verwendet man beispielsweise Suspensionen von Oktanphosphonsäure oder nanoskaligen SiO$_2$-Teilchen.

Anschließend werden vom Querschliff elektronenmikroskopische Aufnahmen durchgeführt. Hierzu sollte man, um statistisch relevante Zahlen zu erhalten, mindestens 50, bevorzugt mindestens 75 und besonders bevorzugt mindestens 100, Teilchen zählen. Bei geeigneter Schliffpräparation kann man aufgrund des Kontrastes die Schichtdicken des Aluminiumkerns und der Korrosionsschutzschicht unterscheiden. Eine Korrektur des azimuthalen Winkels, der i.d.R. mit dem bloßen Auge geschätzt werden kann, ist vorzunehmen. Bei dieser Methode wird zudem die Verteilung der Dickenverhältnisse ermittelt.

Die Dünnheit der Aluminiumpigmente führt zu einem bemerkenswert hohen Formfaktor. Die mit einer Korrosionsschutzschicht beschichteten Aluminiumpigmente besitzen einen Formfaktor, der sich aus dem Verhältnis der mittleren Längsausdehnung zur mittleren Dicke berechnet, von vorzugsweise mehr als 120, bevorzugt mehr als 160, besonders bevorzugt mehr als 200 und ganz besonders bevorzugt mehr als 220. Die mittlere Längsausdehnung ist hierbei der d50-Wert der Summendurchgangsverteilung, wie er üblicherweise durch Laserbeugungsmethoden (Frauenhoferbeugung) bestimmt wird.

Die erfindungsgemäßen Beschichtungszusammensetzungen basieren auf wässrigen Beschichtungszusammensetzungen. Dies bedeutet, daß als Lösemittelkomponente Wasser in einem Anteil von vorzugsweise 50 bis 98%, bevorzugt von 60 bis 95% und besonders bevorzugt von 70 bis 90 % vorhanden ist. Der Rest kann sich aus verschiedensten organischen Lösemitteln zusammensetzen. Beispiel hierfür sind Alkohole wie n-Butanol, Isopropanol, Dowanol PM, Glycole wie Butylglycol, Butyldiglycol, Ethyldiglykol sowie Kohlenwasserstoffe wie Testbenzin oder Solvent Naphtha sowie heterozyklische Verbindungen wie n-Methylpyrrolidon.

Als filmbildende Komponente kommen alle gängigen, mit Wasser kompatiblen Bindemittel in Frage. Die Bindemittel können physikalisch, thermisch oder thermisch kombiniert mit elektromagnetischer Strahlung ("dual-Cure") härtbar sein.

Thermisch härtbare Bindemittel können selbst- oder fremdvernetzend sein. Selbstvernetzende Bindemittel besitzen beide für die Härtung notwendige Arten von komplementären reaktiven Gruppen. Fremdvernetzende Bindemittel benötigen einen Härter oder Vernetzer.

Die Einbrenntemperaturen liegen bevorzugt bei 60 - 190 °C. Als Bindemittel können beispielsweise solche auf Basis von Polyurethanen, Polyamide, Polyharnstoffe, Melaminharze, Polyimide, Polyacrylate, Polymethacrylate, Epoxidharze, Polyether oder Polyester dienen. Möglich ist auch die Verwendung von Kombinationen dieser Funktionalitäten wie z.B. Polyester-Polyurethane oder Polyester-Polyether-Polyurethane, Polyester-Polyacrylat oder Polyacrylat-Polyurethan.

Bevorzugt werden Bindemittel verwendet, die Carboxylgruppen enthalten und vorzugsweise eine Säurezahl von 10 bis 100 mg KOH/g Bindemittel, besonders bevorzugt von 40 bis 80 mg KOH/g Bindemittel, aufweisen. Weiter bevorzugt weisen diese Bindemittel Molekulargewichte von 500 bis 5000 g/mol auf.

Das Verhältnis der Gewichtsanteile von Aluminiumpigment zu filmbildenden Mittel beträgt 1:1 bis 1:10, bevorzugt 1:3 bis 1:6 und besonders bevorzugt 1:4 bis 1:5.

Bei einem Verhältnis der Gewichtsanteile von Aluminiumpigment zu filmbildenden Mittel von über 1:1 ist die Beschichtungszusammensetzung überpigmentiert, d.h. der optische Effekt nimmt deutlich ab. Insbesondere kommt es nicht mehr zur Ausbildung des gewünschten hohen Glanzes und Erscheinungsbildes eines strukturlosen "geschlossenen flüssigen Metallfilmes". Unterhalb eines Verhältnisses der Gewichtsanteile von 1:10 ist zu wenig Aluminiumpigment in der Beschichtungszusammensetzung vorhanden, um eine ausreichende Deckung und metallischen Effekt zu gewährleisten. Die vorstehenden Angaben beziehen sich jedoch insbesondere auf Volltonbeschichtungszusammensetzungen. Enthält die Beschichtungszusammensetzung auch andere Effektpigmente wie beispielsweise Perlglanzpigmente, so kann der Anteil an Aluminiumpigmenten auch stärker verringert werden.

Die gesamte Menge der mit einer Korrosionsschutzschicht versehenen Aluminiumpigmente mit einer mittleren Dicke unter 160 nm, bezogen auf das Gesamtgewicht der erfindungsgemäßen Beschichtungszusammensetzung (Pigmentierungshöhe), beträgt vorzugsweise weniger als 10 Gew.-%. Bevorzugt werden weniger als 5 Gew.-% und besonders bevorzugt weniger als 3 Gew.-% eingesetzt. Aufgrund der geringen Dicke der Pigmente ist deren Deckkraft ausgezeichnet, so daß außerordentlich niedrige Pigmentierungshöhen zur Erzielung des gewünschten visuellen Eindrucks ausreichend sind.

Die Beschichtungszusammensetzung kann ebenfalls weitere Effektpigmente enthalten. Diese umfassen beispielsweise Perlglanzpigmente, mit farbigen Oxiden beschichtete Aluminiumpigmente wie Paliocrom® (Fa. BASF, Deutschland), Interferenzpigmente oder Abmischungen mit anderen, dickeren Aluminiumpigmenten (Hydrolan®, Hydrolux®, Fa. Eckart, Deutschland).

Das Verhältnis der in diesem Fall eingesetzten Mengen an dünnen Aluminiumpigmenten zu weiterem Effektpigment bzw. Bindemittel lässt sich nicht allgemein abgeben und hängen von der Art des eingesetzten Effektpigmentes ab. So sind Perlglanzpigmente weit weniger deckend als Aluminiumpigmente. Hier kann beispielsweise folgende Zusammensetzungen (bezogen auf das Gesamtgewicht an Beschichtungszusammensetzung) verwendet werden:

| | |
|---|---|
| Dünnes Al-Pigment mit passivierender Korrosionsschutzschicht: | 0,5 - 2,0 Gew.-% |
| Perlglanzpigment: | 5 - 15 Gew.-% |
| Filmbildendes Mittel: | 5 - 15 Gew.-%. |

Verwendet man anstelle von Perlglanzpigment konventionelle, dickere Aluminiumpigmente oder mit farbigen Oxiden beschichtete Aluminiumpigmente wie Paliocrom®, so kann beispielsweise folgende Zusammensetzung verwendet werden:

| | |
|---|---|
| Dünnes Al-Pigment mit passivierender Korrosionsschutzschicht: | 0,5 - 2,0 Gew.-% |
| Konventionelles bzw. farbiges Al-Pigment: | 1,5 - 3,0 Gew.-% |
| Filmbildendes Mittel: | 5 - 15 Gew.-%. |

Weiterhin kann die erfindungsgemäße Beschichtungszusammensetzung Farbmittel wie organische und/oder anorganische Buntpigmente und/oder Farbstoffe enthalten.

Des weiteren kann die erfindungsgemäße Beschichtungszusammensetzung Zusatzstoffe wie Füllstoffe, Reaktiwerdünner, pH-Regler wie beispielsweise organische Amine, UV-Absorber, Lichtschutzmittel, Radikalfänger, Photoinitiatoren oder -Coinitiatoren, Vernetzungsmittel, Entlüftungsmittel, Slipaddtive, Inhibitoren, Entschäumungsmittel, Emulgatoren, Netz- und Dispergiermittel, Haftvermittler, Verlaufsmittel, filmbildende Hilfsmittel, Verdicker, Flammschutzmittel, Sikkative, Trocknungsmittel, Hautverhinderungsmittel, Korrosionsinhibitoren, Korrosionsschutzpigmente und/ oder Wachse enthalten. Kombinationen dieser Zusatzstoffe sind möglich und bevorzugt.

Bei einer erfindungsgemäßen Weiterbildung werden die mit einer anorganischen Korrosionsschutzschicht versehenen Aluminiumpigmente noch zusätzlich mit korrosionsinhibierenden organischen Additiven versetzt. Beispiele hierfür sind organische Phosphonsäuren und/oder deren Ester, organische Phosphorsäuren und/oder deren Ester und/ oder langkettige organische Amine mit mehr als 12 C-Atomen. Dieser Zusatz an weiteren korrosionsinhibierenden Additiven kann die Gasungsstabilität der Aluminiumpigmente noch zusätzlich steigern.

Bei einer weiteren erfindungsgemäßen Weiterbildung werden die Aluminiumpigmente zunächst nicht mit einer anorganischen Korrosionsschutzschicht versehen, sondern vielmehr mit anorganischen Korrosionsschutzpigmenten zusammen in der wässrigen Beschichtungszusammensetzung formuliert. Eine derartige Stabilisierungsmethode ist in der EP 1 116 756 beschrieben, die hiermit unter Bezugnahme aufgenommen ist. Die Korrosionsschutzpigmente besitzen eine sehr geringe Wasserlöslichkeit. In der wässrigen Beschichtungszusammensetzung bildet sich daher nach einiger Zeit ein dünner Film des Materials des Korrosionsschutzpigmentes auf der Oberfläche der Aluminiumpigmente, der letzlich den Korrosionsschutz bewirkt.

Als Korrosionsschutzpigmente kommen diverse anorganische Pigmente in Frage. Diese umfassen beispielsweise Strontium-Zink-Phosphosilikat, Zink-Aluminium-Polyphosphathydrat, Zink-Calcium-Aluminium-Strontium-Phosphatsilikathydrat, Zink-Calcium-Strontium-Orthophosphatsilikat, Strontium-Aluminium-Polyphosphathydrat, Calcium-Aluminium-Polyphosphatsilikathydrat, und Natrium- und/oder Calcium- und/oder Zink-Molybdat oder Phospho-Molybdat, Zinkphosphatkomplex oder Mischungen davon.

Der gesamte Feststoffgehalt, d.h. der nichtflüchtige Anteil im Sinne der DIN 53216, der erfindungsgemäßen Beschichtungszusammensetzungen beträgt 8 bis 40 %. Bevorzugt beträgt der gesamte Feststoffgehalt 9 bis 30 Gew.-% und besonders bevorzugt 10 bis 25 Gew.-%.

Bei Feststoffgehalten unter 8% ist die mechanische Haltbarkeit des Überzugs nach Applikation und Härtung (Trocknung) der Beschichtungszusammensetzung nicht mehr gegeben. Der Lack enthält zu wenig Bindemittel. Gehalte über 40% sind aus dem Bereich der konventionellen Beschichtungszusammensetzungen an sich bekannt - sogenannte "high-solids" - sind im vorliegenden Fall für wässrige System mit derart dünnen Aluminiumpigmenten jedoch nicht übertragbar. Hier würde die Rheologie der Beschichtungszusammensetzungen zu schlecht sein.

Die erfindungsgemäßen Beschichtungszusammensetzungen führen nach ihrer Applikation auf einem geeigneten Substrat zu einem hochglänzenden, strukturlosmetallischen Überzug. Der Effekt entspricht dem unter "Chromeffekt" bekannten Erscheinungsphänomen.

Bei der Verformung der Aluminiumpartikel in dem erfindungsgemäßen Verfahren handelt es sich um eine äußerst schonende Verformungsbehandlung. Gemäß einer bevorzugten Weiterbildung der Erfindung weisen die Mahlkörper ein Einzelgewicht von 5,0 bis 12,0 mg auf. Als Mahlkörper werden vorzugsweise sphärische Körper, weiter bevorzugt Kugeln verwendet.

Nach der Verformung der Aluminiumpartikel werden die erhaltenen Aluminiumpigmente von den Mahlkörpern, vorzugsweise den Mahlkugeln, abgetrennt. In einem weiteren Verfahrensschritt können die erhaltenen Aluminiumpigmente einer Größenklassifikation unterzogen werden. Nachfolgend können die Aluminiumpigmente sowohl in Form einer Paste mit einem definierten Festkörpergehalt überführt oder aber auch als Filterkuchen belassen werden.

Die Verformung kann in einem Lösemittel bei einem Gewichtsverhältnis von Lösemittel zu Aluminiumpartikel von 2,8 bis 10 und bei einem Gewichtsverhältnis der Mahlkugeln zu Aluminiumpartikeln von 20 - 70 und mit Schmierstoffen als Mahlhilfsmittel stattfinden.

Die kritische Drehzahl $n_{krit}$ ist ein wichtiger Parameter, der angibt, ab wann die Kugeln durch die Zentrifugalkräfte an die Mühlenwand gepresst werden und daher praktisch keine Mahlung mehr stattfindet:

$$n_{krit} = \sqrt{\frac{g}{2\pi^2} \bullet \frac{1}{D}}$$

wobei D der Trommeldurchmesser und g die Gravitationskonstante ist.

Die Umdrehungsgeschwindigkeiten der Kugelmühle betragen vorzugsweise 25 % bis 68 %, weiter vorzugsweise 50 % bis 62% der kritischen Drehzahl $n_{krit}$.

Niedrige Umdrehungsgeschwindigkeiten begünstigen eine langsame Verformung der Aluminiumpartikel. Um eine langsame Verformung zu bewirken, werden bei dem erfindungsgemäßen Verfahren bevorzugt auch leichte Mahlkugeln verwendet. Mahlkugeln mit einem Einzelgewicht über 13 mg verformen die Aluminiumpartikel zu stark, was zu vorzeitigem Bruch führt. Als Aluminiumpartikel wird vorzugsweise Aluminiumgrieß verwendet.

Die oben angeführten Bedingungen führen zu einer sehr schonenden Verformung, bei der die Aluminiumpartikel langsam ausgeformt werden und Brüche infolge eines Kugelstoßes mit hoher kinetischer Energie vermieden werden. Aufgrund der äußerst schonenden Verformungsweise dauert diese Art der Verformung vergleichsweise lang. Die Verformungszeit beträgt wenigstens 15 h, vorzugsweise 15 bis 72 h, weiter bevorzugt 16 bis 50 h.

Die langen Verformungszeiten führen zu einer Vielzahl von Pigment-Kugel-Stößen. Dadurch wird das Pigment sehr gleichmäßig ausgeformt, was sich in einer sehr glatten Oberfläche und in einer engen Dickenverteilung bemerkbar macht.

Im Unterschied zu herkömmlichen Mahlverfahren werden die Aluminiumpartikel bei dem erfindungsgemäßen Verfahren zum überwiegenden Anteil nicht vermahlen bzw. zerkleinert, sondern äußerst schonend über einen längeren Zeitraum verformt. Insofern wird vorliegend von einer Verformung und nicht von einer Vermahlung der Aluminiumpartikel gesprochen, obgleich zur Verformung Mahlkörper verwendet werden.

Bei den verwendeten Aluminiumpartikeln handelt es sich bevorzugt um Aluminiumgrieß. Dieser Aluminiumgrieß wird bevorzugt in "Atomizern" durch Verdüsung von flüssigem Aluminium hergestellt. Auch Folienpulver aus einer Aluminiumfolie sowie Abfallfolien können Verwendung finden. Der Grieß kann eine runde oder spratzige Form haben. Aluminiumpartikel in Nadelform werden bei dem erfindungsgemäßen Verfahren als Ausgangsmaterial nicht verwendet, da diese nicht zu dünnen Effektpigmenten verformbar sind. Bevorzugt ist, daß die Aluminiumpartikel eine kugelförmige bis ellipsoide Form aufweisen. Gemäß einer bevorzugten Weiterbildung ist der verwendete Aluminiumgrieß vorverformt.

Der Aluminiumgrieß sollte vorzugsweise einen mittleren Durchmesser von unter 100 $\mu$m und bevorzugt von unter 30 $\mu$m, weiter bevorzugt von weniger als 20 $\mu$m, noch weiter bevorzugt von unter 10 $\mu$m haben. Die Reinheit des verwendeten Aluminiums beträgt vorzugsweise 99,0 bis über 99,5%.

Als Schmierstoffe können eine Vielzahl von Verbindungen verwendet werden. Hierbei sind die schon seit langer Zeit verwendeten Fettsäuren mit Alkylresten von 10 bis 24 C-Atomen zu nennen. Vorzugsweise werden Ölsäure oder Mischungen von Ölsäure mit Stearinsäure verwendet.

Das Schmiermittel sollte nicht in zu geringer Menge eingesetzt werden, da anderenfalls infolge der starken Ausformung der Aluminiumpartikel die sehr großen Oberflächen der hergestellten plättchenartigen Aluminiumpigmente nur ungenügend durch adsorbiertes Schmiermittel abgesättigt werden. In diesem Fall kann es zu Kaltverschweißungen kommen. Typische Mengen sind daher 1 bis 20 Gew.-%, bevorzugt 2 bis 15 Gew.-%, Schmiermittel bezogen auf das eingesetzte Aluminiumgewicht.

Die Wahl des Lösemittels ist an sich unkritisch. Man kann übliche Lösemittel wie Testbenzin, Solvent Naphtha etc. einsetzen. Auch die Verwendung von Alkoholen, wie z.B. Isopropanol, Ether, Ketone, Ester usw. ist möglich.

Die vorzugsweise verwendeten Kugeln weisen vorzugsweise ein Einzelgewicht von 2 bis 13 mg auf. Weiterhin ist bevorzugt, daß die vorzugsweise verwendeten Kugeln ein Einzelgewicht von 5,0 bis 12,0 mg aufweisen. Bevorzugt sind Kugeln mit glatter Oberfläche, möglichst runder Form und einheitlicher Größe. Das Kugelmaterial kann aus Stahl, Glas oder Keramik, wie z.B. Zirkoniumoxid oder Korund sein.

Die Temperaturen während des Verformungsvorganges liegen vorzugsweise im Bereich von 10 °C bis 70 °C. Bevorzugt sind Temperaturen in einem Bereich von 25 °C bis 45 °C.

Bedingt durch das erfindungsgemäße Herstellungsverfahren sind die derart hergestellten Aluminiumpigmente äußerst vorteilhaft frei von anhaftenden Polymerfolien. Daher besitzen die erfindungsgemäßen Aluminiumpimente nicht die Nachteile von noch mit Resten des "Release-coats" behafteter Aluminiumpigmente, die bei den PVD-Verfahren erhalten werden. Zudem ist ihre Herstellungsweise billiger als die aufwendigen PVD-Herstellungsverfahren. Die Trennung der hergestellten Aluminiumpigmente von den Mahlkörpern, vorzugsweise Mahlkugeln, kann auf herkömmliche Art und Weise durch Siebung erfolgen.

Nach der Abtrennung von den Mahlkugeln werden die Aluminiumpigmente vorzugsweise einer Größenklassifikation unterzogen. Diese Klassifikation sollte schonend durchgeführt werden, um die dünnen Aluminiumpigmente nicht zu zerstören. Es kann sich dabei beispielsweise um eine Nasssiebung, eine Dekantierung oder auch einer Trennung durch Sedimentation handeln. Bei der Nasssiebung wird i.d.R. der Grobanteil herausgesiebt. Bei den anderen Verfahren kann insbesondere der Feinstanteil abgetrennt werden. Anschließend wird die Suspension von überschüssigem Lösemittel getrennt (z.B. mit Hilfe einer Filterpresse).

Beim anschließenden Passivierungsschritt werden die Pigmente in Form eines Filterkuchens oder auch einer Paste mit definiert eingestelltem Feststoffgehalt eingesetzt.

Im Fall von $SiO_2$ als Schutzschicht wird dieses bevorzugt durch Sol-Gel-Verfahren aufgebracht.

Das Dispergieren der Aluminiumpigmente in dem Wasserlack erfolgt bevorzugt aus einer Aluminiumpigmentpaste. Diese Paste besitzt ein Lösemittel, welches bevorzugt ebenfalls zum Verformen der Pigmente verwendet wurde. Bevorzugt handelt es sich hierbei um Testbenzin und/oder Solvent Naphtha, Butylglycol oder Isopropanol.

Der Festkörpergehalt der Aluminiumpigmentpaste liegt vorzugsweise bei 20 bis 65 Gew.-%, weiter bevorzugt bei 25 bis 60 Gew.-% und besonders bevorzugt bei 30 bis 55 Gew-% sowie noch weiter bevorzugt bei 40 bis 50 Gew-%, jeweils bezogen auf das Gesamtgewicht der Aluminiumpaste.

Oberhalb von 65 Gew.-% können die Pigmente agglomerieren, was die optische Wirkung entscheidend beeinträchtigen würde. Des weiteren weist die höhere spezifische Oberfläche der dünnen Pigmente einen höheren Lösemittelbedarf auf, um vollständig benetzt zu werden. Unterhalb von 20% wird die Paste zu dünnflüssig und man kann sie ohne zusätzliche Rührschritte nicht mehr genau genug dosieren, um sie zur Beschichtungszusammensetzung zu geben.

Insbesondere letzterer Punkt ist ein großes Problem bei Verwendung von PVD-Pigmenten in Beschichtungszusammensetzungen. Diese werden - auch in einer passivierten Form - in Dispersionen mit Festkörpergehalten von 10 bis 20 Gew.-% angeboten (z.B. Hydroshine® 3001, Fa. Eckart). Das heißt, diese PVD-Pigmente können - im Unterschied zu der erfindungsgemäßen Beschichtungszusammensetzung - nicht in einer vorteilhaften pastösen Form mit geringerem Lösungsmittelgehalt gelagert, transportiert und verwendet werden.

Bei der Einarbeitung in die Beschichtungszusammensetzung wird bei einer bevorzugten Ausführungsform die Aluminiumpigmentpaste mit Lösemittel und ggfs. etwas filmbildenden Mittel unter Bildung eines Pigmentkonzentrates angeteigt. Als Lösemittel werden hierbei bevorzugt organische Lösemittel wie beispielsweise Isopropanol oder Butylglycol verwendet. Gegebenenfalls können auch weitere Netzmittel zur besseren Dispergierung der Aluminiumpigmente zugesetzt werden. Das filmbildende Mittel kann in einer nichtneutralisierten, teilneutralisierten oder auch neutralisierten Form vorliegen. Bevorzugt liegt es in einer nichtneutralisierten Form vor und besitzt eine Säurezahl von 10 bis 100 mg KOH/g Bindemittel. Durch diesen Prozessschritt werden die Aluminiumpigmente gut vordispergiert und ggfs. bereits vom Bindemittel benetzt. Das Gewichtsverhältnis Aluminiumpigment zu Lösemittel in diesem Pigmentkonzentrat beträgt 1:5 bis 5:1, bevorzugt 1:2 bis 2:1 und besonders bevorzugt etwa 1:1. Anschließend wird dieses Pigmentkonzentrat mit der Flüssigphase und dem filmbildenden Mittel sowie den übrigen Bestandteilen der Beschichtungszusammensetzung unter Rühren vermischt.

Die erfindungsgemäßen Beschichtungszusammensetzungen finden Verwendung in hochglänzenden Cöatings wie Automobillacken (OEM sowie Reparaturlackierung), Industrielackierungen oder der Lackierung von Kunststoffen. Insbesondere finden sie Verwendung in einschichtigen Lackierungen ohne Klarlackschicht. Die unter Verwendung der erfindungsgemäßen Beschichtungszusammensetzung hergestellten Lackierungen können überraschenderweise auch ohne zusätzliche Klarlackschicht verwendet werden. Der Glanz derartiger Beschichtungen ist bereits vergleichbar mit dem Glanz herkömmlicher Lackierungen mit Klarlack und konventionellen Aluminiumpigmenten im Basislack. Das heißt, insbesondere im Automobilbereich können große Einsparungen erzielt werden, da eine separate Klarlacklackierung nicht erforderlich ist.

Als für die Applikation geeignete Substrate sind metallische Untergründe, Kunststoffe, Holz oder Glas zu nennen.

Mit erfindungsgemäßen Beschichtungszusammensetzungen beschichtete Gegenstände umfassen beispielsweise Fahrzeuge wie Automobile, Kraftfahrzeugkarosserien, Automobilteile aus Metall oder Kunststoff, elektrische Geräte wie Mobiltelefone oder Möbel.

Die Erfindung betrifft insbesondere die vorgenannten Gegenstände, die mit der erfindungsgemäßen Beschichtungszusammensetzung beschichtet sind, ohne daß nachfolgend eine weitere Schutzschicht, wie beispielsweise eine Klarlackschicht, aufgebracht ist.

**Beispiele**

Beispiel 1:

a) Verformung:

In einer Topfmühle (Länge: 32 cm, Breite: 19 cm) werden 3,1 kg Glaskugeln (Durchmesser: 2 mm), 310 g Testbenzin, 93 g Aluminiumgrieß (mittlerer Durchmesser < 8 $\mu$m) und 9,3 g Ölsäure aufgegeben. Anschließend wird der Aluminiumgrieß 20 h lang bei 57 U/min verformt. Das Produkt wird durch Spülen mit Testbenzin von den Mahlkugeln getrennt und anschließend in einer Nasssiebung auf einem 25 $\mu$m-Sieb durchgesiebt. Das Feinkorn wird über einer Nutsche weitgehend von Testbenzin befreit und der Filterkuchen anschließend homogenisiert (ca. 40% Feststoffanteil).

b) SiO$_2$-Beschichtung:

96,4 g des Filterkuchens der nach a) verformten Aluminiumpigmente (entspricht 38,5 g Al) werden in 375 ml Isopropanol dispergiert und auf Siedetemperatur gebracht. 9,4 g Tetraethoxysilan werden zugegeben. Anschließend dosiert man über einen Zeitraum von 3 h eine Lösung von 4,0 g 25 %-igen NH$_3$ in 7,0 g Wasser hinzu. Nach weiteren 3 h gibt man 1g Dynasylan AMMO, erhältlich bei Degussa AG, Rheinfelden, Deutschland, hinzu. Es wird auf Raumtemperatur abgekühlt und die Suspension über einen Büchnertrichter abgenutscht. Anschließend wird der Filterkuchen

**EP 1 756 234 B1**

homogenisiert und mit Isopropanol zu einer Paste mit einem Festkörperanteil von 40 Gew-% eingestellt.

c) Beschichtungszusammensetzung:

Das unter a) und b) hergestellte Pigment wurde in drei unterschiedlichen Wasserlacksystemen untersucht.

Dabei wird im Allgemeinen folgendermaßen vorgegangen:

Die Aluminiumpigmentpaste wird mit einem Dissolver oder Flügelrührer zusammen mit Lösemittel (z. B. Butylglykol) vordispergiert. Das Gewichtsverhältnis zwischen Aluminiumpaste und Lösemittel beträgt in der Regel 1 : 1. Zusätzliche Netzmittel können den Dispergierprozess beschleunigen. Anschließend wird die Aluminiumaufschlämmung unter Rühren dem Bindemittel zugegeben. Diese Mischung wird bis zur vollständigen Homogenisierung gerührt. Die rheologischen Eigenschaften der Beschichtungszusammensetzung werden mit geeigneten Verdickern auf die jeweiligen Anforderungen eingestellt. Die Einstellung der Spritzviskosität erfolgt in den beschriebenen Fällen mit dest. Wasser.

Der Lackfestkörper liegt zwischen 10% und 50%.

Die Lackviskosität nach DIN 53211 beträgt 15s bis 60s.

Das Gewichtsverhältnis Aluminiumpigment : Bindemittel liegt zwischen 0,15 : 1 bis 0,2 : 1.

**Lacksystem 1** ist ein wasserverdünnbarer Metalleffekt-Basislack. Das filmbildende Mittel besteht aus:

- 5,0 - 10,0 Gew:-% Polyesterharz
- 8,0 - 15,0 Gew:-% Acrylatharz
- 8,0 - 15,0 Gew:-%.Polyurethanharz und 0,5 - 3,0 Gew:-% Melaminharz

Die Angabe Gew:-% bezieht sich auf das Gewicht des gesamten Lacks. Alle Bindemittelkomponenten sind mit Wasser mischbar.

**Lacksystem 2** ist ein Low - Solid Metalleffekt Wasserbasislack, wobei das filmbildende Mittel aus:

- 10,0 - 40,0 Gew:-% Acrylatharz, wasserverdünnbar
- 3,0 - 12,0 Gew:-% Polyesterharz, wasserverdünnbar besteht.

Dieser Lack ist speziell für die Verwendung von PVD-Aluminiumpigmenten konzipiert worden. Er wird vor allem für die OEM - und Reparatur-Lackierung kommerziell eingesetzt. Durch eine Mischung der einzelnen Bindemittel erreicht man dabei eine möglichst brillante Metalleffektausbildung.

Diese Basislacke müssen, um entsprechende Beständigkeiten zu erzielen, normalerweise mit einem Klarlack überlackiert werden.

Beim **Lacksystem 3** handelt es sich um einen Einschicht-Kunststofflack für Consumer Electronic Goods auf Basis:

- 20,0 - 60,0 Gew:-%. hochmolekulare Acrylat-Dispersion und
- 10,0 - 30,0 Gew:-% Polyurethan-Dispersion

Die Mischungsverhältnisse der Bindemittel sind je nach spezifischer Anwendung verschiedenen.

Neben dem optischen Eindruck spielen bei diesen Lacksystemen die Beständigkeiten beispielsweise gegenüber Chemikalien, Cremes, Kaffee, Alkohol etc. eine große Rolle.

Verglichen wurde das unter 1 a),b) hergestellte Aluminiumpigment mit einem kommerziell erhältlichen Silberdollar-Pigment (2156) der Fa. Eckart, mit vergleichbarem Kornband und einem PVD-Pigment (Metalure®, welches von der Fa. Eckart vertrieben wird).

Das Standard Silberdollarpigment wurde sowohl in Anlehnung an die EP 0 259 592 mittels der Chromatierung (Produkt: Hydrolux 2156, Fa. Eckart) als auch mit einer Sol-Gel-$SiO_2$-Beschichtung (Produkt: Hydrolan 2156, 55900/G, Fa. Eckart) gegenüber Korrosion stabilisiert. Das PVD-Pigment wurde durch eine Sol-Gel-$SiO_2$-Beschichtung gegenüber Korrosion stabilisiert (Hydroshine® WS 3001, Fa. Eckart).

Im Einzelnen ergeben sich die in Tabelle 1 aufgeführten Beispiele.

**Tab. 1: Beispiele und Vergleichsbeispiele**

| Beispiel | Pigment | Lacksystem | deckende Pigmentierungshöhe* in Gew.-% |
|---|---|---|---|
| Beispiel 1 | Wie unter Beispiel 1 a) und b) hergestellt | Lacksystem 1 | 2,0 % |

(fortgesetzt)

| Beispiel | Pigment | Lacksystem | deckende Pigmentierungshöhe* in Gew.-% |
|---|---|---|---|
| Vergleichsbeispiel 2 | Hydrolan 2156 55900/G | Lacksystem 1 | 3,5 % |
| Vergleichsbeispiel 3 | Hydrolux 2156 | Lacksystem 1 | 3,5 % |
| Vergleichsbeispiel 4 | Hydroshine WS 3001 | Lacksystem 1 | 1,5 % |
| Beispiel 5 | Wie unter Beispiel 1 a) und b) hergestellt | Lacksystem 2 | 2,0 % |
| Vergleichsbeispiel 6 | Hydrolan 2156 55900/G | Lacksystem 2 | 3,5 % |
| Vergleichsbeispiel 7 | Hydrolux 2156 | Lacksystem 2 | 3,5 % |
| Vergleichsbeispiel 8 | Hydroshine WS 3001 | Lacksystem 2 | 1,5 % |
| Beispiel 9 | Wie unter Beispiel 1 a) und b) hergestellt | Lacksystem 3 | 2,0 % |
| Vergleichsbeispiel 10 | Hydrolan 2156 55900/G | Lacksystem 3 | 3,5 % |
| Vergleichsbeispiel 11 | Hydrolux 2156 | Lacksystem 3 | 3,5 % |
| Vergleichsbeispiel 12 | Hydroshine WS 3001 | Lacksystem 3 | 1,5 % |
| * die deckende Pigmentierungshöhe wurde zuvor in vergleichenden Rakelabzügen ermittelt. | | | |

Verglichen wurden die optischen Eigenschaften, wie Glanz, Helligkeit, Brillanz und Flop, die lacktechnische Applizierbarkeit hinsichtlich Wolkenbildung (= Hell-Dunkel-Schattierung) und die Chemikalienbeständigkeit in Einschichtlackierungen.

**Durchführung:**

Die Beschichtungszusammensetzungen wurden pneumatisch mittels einer Langguth-Spritzautomaten auf Prüfbleche appliziert. Als Spritzpistole wurde jeweils eine SATA LP 90 verwendet.
Die Spritzparameter hierfür waren im Einzelnen:

**Lacksystem 1**

Nadel:    1.0.0
Druck:    4 bar
Gänge:    4

Ablüftzeit zwischen den Gängen: keine
Nach dem 4. Gang ließ man das Blech 15 min lang ablüften, brannte den Lack für 30 min bei 80°C ein und applizierte einen kommerziell gängigen Klarlack.

**Lacksystem 2**

Nadel:    0.2.0
Druck:    4 bar
Gänge:    3

Ablüftzeit zwischen den Gängen: nach jedem Gang eine Minute
Nach dem 4. Gang ließ man das Blech 15 min lang ablüften, brannte den Lack für 15 min bei 160°C ein und

applizierte einen kommerziell gängigen Klarlack

**Lacksystem 3:**

Nadel :    1.3.0
Druck:     4 bar
Gänge:     3

Ablüftzeit zwischen den Gängen: keine

Nach dem 4. Gang ließ man das Blech 15 min lang ablüften, brannte den Lack für 30 min bei 80°C ein und applizierte einen kommerziell gängigen Klarlack.

Hier ist anzumerken, daß es bei den Vergleichsbeispielen 4, 8 und 12 notwendig war, nach jedem Spritzgang mit Hilfe der gereinigten Spritzpistole das Blech trocken zu blasen. Die hier verwendeten PVD-Pigmente schmiegen sich aufgrund ihrer Dünnheit und glatten Oberfläche derart aneinander an, das das Verdunsten des Lösemittels (vorwiegend Wasser) und damit der Trocknungsvorgang extrem verlangsamt wird. Eine derartige Vorgehensweise ist im Labormaßstab noch praktikabel und führt zu sehr guten Spritzergebnissen. Eine Übertragung jedoch auf eine Automobilserienlackierung, in der die Karosserien automatisiert lackiert werden, ist hier nicht denkbar. Aufgrund dieser Tatsache ist ein kommerzieller Einsatz von beschichteten PVD-Pigmenten in Wasserlacken beispielsweise in der Automobilindustrie derzeit nicht möglich.

Die Helligkeitmessungen wurden bei fünf verschiedenen Betrachtungswinkeln (15°; 25°; 45°; 75° und 110°) mit einem Gerät der Fa. X-Rite bei einem festen Einfallswinkel von 45° durchgeführt.

Der Glanzgrad wurde mit dem Trigloss-Glanzmessgerät (Fa. Byk.Gardner) bei 20° ermittelt.

Aus den Helligkeitswerten bei 15°, 45° und 110° kann nach einer ursprünglich von der Firma DuPont angegebene Formel ein Flopindex bestimmt werden, welcher gut die winkelabhängige Helligkeitsänderung von konventionellen Metallic-Applikationen wiedergibt (A.B.J. Rodriguez, JOCCA, (1992(4)) S. 150 - 153):

$$Flopindex = 2{,}69 \times \frac{(L^{*}_{15°} - L^{*}_{110°})^{1,11}}{(L^{*}_{45°})^{0,86}}$$

**Tab. 2: Helligkeits-, Flop- und Glanzwerte von Beschichtungen**

| Probe | L* 110° | L* 75° | L* 45° | L* 25° | L* 15° | FLOP | Glanz 20° | Visueller Struktureindruck |
|---|---|---|---|---|---|---|---|---|
| Beispiel 5 | 21,6 | 23,0 | 42,7 | 104,2 | 166,8 | 26,8 | 21,3 | strukturlos |
| Vergleichsbeispiel 6 | 27,1 | 27,2 | 47,7 | 107,4 | 163,4 | 22,7 | 11,4 | Partikelstruktur erkennbar |
| Vergleichsbeispiel 7 | 28,9 | 29,6 | 51,9 | 112,7 | 162,7 | 10,9 | 19,7 | Partikelstruktur erkennbar |
| Vergleichsbeispiel 8 | 18,6 | 21,3 | 37,9 | 88,0 | 146,7 | 25,8 | 70,8 | strukturlos |
| Beispiel 1 | 24,7 | 28,7 | 57,4 | 117,9 | 155,4 | 18,5 | 104,5 | strukturlos |
| Vergleichsbeispiel 2 | 30,9 | 34,9 | 62,1 | 113,7 | 142,3 | 14,4 | 101,1 | Partikelstruktur erkennbar |
| Vergleichsbeispiel 3 | 30,7 | 34,6 | 60,7 | 112,7 | 142,2 | 14,7 | 101,9 | Partikelstruktur erkennbar |
| Vergleichsbeispiel 4 | 25,7 | 31,5 | 56,9 | 110,5 | 145,9 | 16,9 | 102,7 | strukturlos |

Durchgängig weisen die erfindungsgemäßen Beispiele 1 und 5 höhere Flopwerte und höhere Helligkeit (15°) auf als die entsprechenden Vergleichsbeispiele. Der Glanz ist im Lacksystem 2 ebenfalls am höchsten. Hingegen weist das Vergleichsbeispiel 8, welches passivierte PVD-Pigmente enthält, im Lacksystem 1 den höchsten Glanz auf. Dies ist hier jedoch nicht erstaunlich, da dieses Lacksystem speziell für die Verwendung von PVD-Pigmenten optimiert wurde. Es wird von der Fa. Eckart für den Einsatz von Hydroshine ® empfohlen. Die erfindungsgemäßen Beispiele wie auch jene Vergleichsbeispiele, bei denen PVD-Pigmente eingesetzt wurden, weisen mit dem bloßen Auge keine erkennbaren Strukturen auf. Der optische Eindruck entspricht dem eines "flüssigen" Metalls. Alle anderen Vergleichsbeispiele weisen hingegen eine deutliche Strukturierung auf. Obwohl das menschliche Auge nicht die einzelnen Pigmentteilchen in der Lackierung zu unterscheiden vermag, sieht man doch partikuläre Strukturen.

Es sei betont, das sich derartige Effekte nicht mit herkömmlichen Größen der Farbmetrik wie beispielsweise DIO (distinctness of image) oder Haze ("Grauschleier") beschreiben lassen. Dies ist nicht überraschend, da Lackierungen mit derart dünnen Aluminiumpigmente neu sind und optisch neue Effekte darstellen, die mit herkömmlichen Meßverfahren nicht erfassbar sind.

## WOLKENBILDUNG

Unter Wolkenbildung versteht man die Hell-Dunkel-Schattierungen bei Effektlacken. Diese spielt vor allem bei niedrigen Lackschichtstärken eine große Rolle.
Die Applizierbarkeit wurde durch Lackierung eines Keiles mittels pneumatischer Applikation auf dem LabPainter der Fa. LacTec ermittelt:
Es wurden jeweils Beschichtungszusammensetzungen basierend auf Lacksystem 1 verwendet. Lackiert wurde auf Prüftafeln der Größe 70 cm X 30 cm. Die Geschwindigkeit vom Förderer wurde mit 0,8 m/s festgelegt. Die Lackmenge der Pistole lag bei 200 ml/min, die Hornluft wurde mit 400 NUmin und die Zerstäuberluft bei 6000 NUmin eingestellt.
Die Filmstärke des trockenen Lackfilmes (Keil) lag bei 5- 24 $\mu$m.
Bewertet wird die Wolkenbildung in Abhängigkeit der Schichtstärke mit dem Auge. Die Bewertungsskala läuft von 1 bis 5, wobei gilt:

1 = keine Wolkenbildung
2 = leichte Wolkenbildung (noch akzeptabel)
3 = mittlere Wolkenbildung (nicht mehr akzeptabel)
4 = starke Wolkenbildung
5 = sehr starke Wolkenbildung

**Tab. 3: Wolkenbildung bei verschiedenen Schichtdicken der Lackierung**

| *SCHICHTSTARKE 8 - 10 $\mu m$* | *WERT* | *Untergrundabdeckung ab:* |
|---|---|---|
| *Beispiel 1* | **2 - 3** | **10$\mu$m** |
| *Vergleichsbeispiel 4* | **3 - 4** | **10$\mu$m** |
| *Vergleichsbeispiel 2* | **4 - 5** | **15$\mu$m** |
| *Vergleichsbeispiel 3* | **3 - 4** | **12$\mu$m** |

| *SCHICHTSTARKE 10 - 12 $\mu m$* | *WERT* |
|---|---|
| *Beispiel 1* | **2 (ab hier deckend)** |
| *Vergleichsbeispiel 4* | **2 - 3 (ab hier deckend)** |
| *Vergleichsbeispiel 2* | **3 - 4** |
| *Vergleichsbeispiel 3* | **2 - 3** |

| *SCHICHTSTARKE 12 - 14 $\mu m$* | *WERT* |
|---|---|
| *Beispiel 1* | **2** |
| *Vergleichsbeispiel 4* | **2 - 3** |
| *Vergleichsbeispiel 2* | **2 - 3** |
| *Vergleichsbeispiel 3* | **2 (ab hier deckend)** |

| *SCHICHTSTARKE 14 - 16 $\mu m$* | *WERT* |
|---|---|
| *Beispiel 1* | **1 - 2** |
| *Vergleichsbeispiel 4* | **2** |
| *Vergleichsbeispiel 2* | **2 (ab hier deckend)** |
| *Vergleichsbeispiel 3* | **2** |

| *SCHICHTSTARKE 16 - 20 $\mu m$* | *WERT* |
|---|---|
| *Beispiel 1* | **1** |
| *Vergleichsbeispiel 4* | **1 - 2** |
| *Vergleichsbeispiel 2* | **1 - 2** |
| *Vergleichsbeispiel 3* | **2** |

Die Wolkenbildung tritt bevorzugt bei niedrigen Schichtstärken auf. Entscheidend ist, daß sie bei einer deckenden Schichtdicke in einem akzeptablen Maße auftritt. Die Schichtdicke sollte hierbei möglichst niedrig sein. Dies entspricht dem aktuellen Trend der Automobilindustrie zu Deckschichten mit immer geringeren Schichtdicken. Das erfindungsgemäße Beispiel 1 zeigt hier neben dem Vergleichsbeispiel 4 die besten Ergebnisse. Dabei ist jedoch das erfindungsgemäße Beispiel noch etwas besser, da es bereits bei einer Schichtdicke von 10 -12 $\mu$m deckt und eine tolerierbare Wolkenbildung zeigt, während das Vergleichsbeispiel 4 zwar auch bei dieser Schichtdicke deckt, jedoch erst bei 12 - 14 $\mu$m eine tolerierbare Wolkenbildung zeigt. Die dünnen Pigmente orientieren sich in der Lackschicht am besten. Die Deckfähigkeit ist ebenfalls deutlich besser. Beide Effekte bewirken eine geringere Neigung zur Wolkenbildung bei geringen Lackschichtdicken.

Neben diesem Vergleich wurde die Wolkenbildung auch bei Lacken untersucht, welche dieselbe Pigmentierungshöhe aufweisen.
Hier zeigt sich ein noch besseres Ergebnis für Beispiel 1, da noch eher ein deckender Lackfilm erzielt wird.

**Chemikalienbeständigkeit in Einschichtlackierungen:**

Die Chemikalienbeständigkeit wurde nach folgendem Test durchgeführt:
Bei einer Prüfung der Beständigkeit gegen verschiedene Säuren und Laugen wurden Prüfbleche, die mit den Einschichtlackierungen in den Lacksystemen 2 und 3 der verschiedenen erfindungsgemäßen Beispiele bzw. Vergleichsbeispiele, wie weiter unten beschrieben, beschichtet waren, mit Salzsäure und Schwefelsäure verschiedener Konzentrationen sowie mit Natronlauge betropft. Die Tropfen wirkten 5 Minuten bis drei Stunden auf das jeweilige Blech ein. Nach Abwaschen der Säuren bzw. Laugen wurde jeder Tropfenbereich auf den Vergrauungsgrad mit dem Auge gemäß den nachstehenden Kriterien beurteilt:

0 Punkte = kein Angriff
1 Punkt = schwache Vergrauung
2 Punkte = starke Vergrauung
3 Punkte = vollständige Vergrauung

Aus insgesamt 14 Tropfenbereichen wurde eine Gesamtbewertung mit 0 - 42 Punkten errechnet. Die Punktzahlen wurden wiederum folgendem Notenschema unterworfen:

0 - 4 Punkte: Note 1 (sehr gut)
5 - 9 Punkte: Note 2 (gut)
10 - 18 Punkte: Note 3 (mittel)
19 - 28 Punkte: Note 4 (schlecht)
29 - 42 Punkte: Note 5 (sehr schlecht)

**Tab. 5: Chemikalienbeständigkeit in Einschichtlackierungen:**

| Probe | Punktzahl | Note | Lacksystem |
|---|---|---|---|
| Beispiel 5 | 2 | 1 | 2 |
| Vergleichsbeispiel 6 | 9 | 2 | 2 |
| Vergleichsbeispiel 7 | 14 | 3 | 2 |
| Vergleichsbeispiel 8 | 0 | 1 | 2 |
| Beispiel 9 | 0 | 1 | 3 |
| Vergleichsbeispiel 10 | 6 | 2 | 3 |
| Vergleichsbeispiel 11 | 1 | 1 | 3 |
| Vergleichsbeispiel12 | 3 | 1 | 3 |
| Unbeschichtete Metallux 2156 im Lacksystem 3 | 14 | 3 | 3 |

Die Ergebnisse zeigen, daß Beschichtungszusammensetzungen mit chromatierten Aluminiumpigmenten (Hydrolux 2156) den Chemikalientest im Lacksystem 2 nicht bestehen. Die Beschichtungszusammensetzungen mit $SiO_2$-be-schichteten konventionellen Silberdollar-Pigmenten (Hydrolan 2156) schneiden insgesamt besser ab, bestehen jedoch im Lacksystem 3 den Test nicht. Beschichtungszusammensetzungen, die die erfindungsgemäßen oder die PVD-Pigmente enthalten, bestehen in beiden Fällen den Test. In der Gesamtbewertung jedoch schneidet die Chemikalienbeständigkeit von den erfindungsgemäßen Beschichtungszusammensetzungen am besten ab, dicht gefolgt von jenen, die mit PVD-Pigmenten pigmentiert wurden. PVD-Pigmente schneiden im für ihre Verwendung konzipierten Lacksystem 2 am besten ab. Die dünnen, durch schonende Verformung bei dem erfindungsgemäßen Verfahren hergestellten Aluminiumpigmente lassen sich jedoch weit universeller einsetzen, so daß die erfindungsgemäßen Beschichtungszusammensetzungen weniger Schwankungen in ihrem Eigenschaftsprofil unterliegen als Beschichtungszusammensetzungen, die PVD-Pigmente enthalten.

**Ergebnisse der einzelnen Lacksysteme zueinander:**

Die erfindungsgemäßen Beispiele weisen im Vergleich zu den bekannten Silberdollarpigmenten ein deutlich verbessertes Deckvermögen, verbesserte Helligkeit und Flopeigenschaften auf.

Hinsichtlich der Hell-Dunkel-Schattierung zeigen die neuen Beschichtungszusammensetzungen aufgrund der o. g. Eigenschaften eine bis dato nicht vorhandene niedrige Tendenz zur Wolkenbildung auf.

Durch die gute Einbettung im Lacksystem resultiert eine beachtliche Chemikalienbeständigkeit der unter Verwendung des erfindungsgemäßen Beschichtungsmittels hergestellten Beschichtung auch in Einschichtlacksystemen.

Die vorliegende Erfindung stellt mithin wässrige Beschichtungszusammensetzungen bereit, die mit einer Korrosionsschutzschicht versehene Aluminiumpigmente enthalten, wobei die Aluminiumpigmente mitsamt der Korrosionsschutzschicht eine mittlere Schichtdicke von unter 160 nm haben. Derartige Beschichtungszusammensetzungen ermöglichen die Herstellung eines hochglänzenden metallischen Überzugfilmes ohne Wolkenbildung und mit dem visuell sichtbaren Eindruck eines strukturlosen geschlossenen Metallfilmes, der an "flüssiges Metall" erinnert. Zudem weisen diese Beschichtungszusammensetzungen eine hohe Ergiebigkeit in bezug auf die Aluminiumpigmente aufgrund ihrer hohen Deckkraft auf. Diese Effekte sind auch bei bislang unerreicht niedrigen Schichtdicken vorhanden. Darüber hinaus weisen die Überzüge eine hohe Chemikalienbeständigkeit in Einschichtlackierungen auch ohne zusätzlich schützenden Klarlack auf.

**Patentansprüche**

1. Wässrige Beschichtungszusammensetzung, die wenigstens ein mit Wasser kompatibles filmbildendes Mittel und mit wenigstens einer anorganischen Korrosionsschutzschicht versehene Aluminiumpigmente enthält,
   **dadurch gekennzeichnet,**
   **daß** die Dicke der mit wenigstens einer anorganischen Korrosionsschutzschicht versehenen Aluminiumpigmente im Mittel 50 bis 90 nm beträgt, wobei die anorganische Korrosionsschutz Schicht eine $SiO_2$-Schicht mit einer Schichtdicke von 3 bis 20 nm ist.

2. Wässrige Beschichtungszusammensetzung, nach Anspruch 1,
   **dadurch gekennzeichnet,**
   **daß** der Formfaktor, der sich aus dem Verhältnis der mittleren Längsausdehnung zur mittleren Dicke berechnet, der mit wenigstens einer anorganischen Korrosionsschutzschicht versehenen Aluminiumpigmente mehr als 120 beträgt.

3. Wässrige Beschichtungszusammensetzung, nach einem der vorherigen Ansprüche
   **dadurch gekennzeichnet,**
   **daß** der Formfaktor, der sich aus dem Verhältnis der mittleren Längsausdehnung zur mittleren Dicke berechnet, der mit wenigstens einer anorganischen Korrosionsschutzschicht versehenen Aluminiumpigmente mehr als 200 beträgt.

4. Beschichtungszusammensetzung nach einem der vorherigen Ansprüche,
   **dadurch gekennzeichnet,**
   **daß** die Siliziumdioxid-Oberfläche vorzugsweise mit Silanen belegt ist.

5. Beschichtungszusammensetzung nach einem der vorherigen Ansprüche,
   **dadurch gekennzeichnet,**
   **daß** der Anteil der Korrosionsschutzschicht weniger als 20 Gew.-%, bezogen auf das Gesamtgewicht der mit der Korrosionsschutzschicht versehenen Aluminiumpigmente, beträgt.

6. Beschichtungszusammensetzung nach einem der vorherigen Ansprüche,
   **dadurch gekennzeichnet,**
   **dass** das filmbildende Mittel aus der Gruppe, bestehend aus Polyurethanen, Polyamide, Polyharnstoffe, Melaminharze, Polyimide, Polyacrylate, Polymethacrylate, Epoxidharze, Polyether, Polyester und Mischungen davon, ausgewählt wird.

7. Beschichtungszusammensetzung nach einem der vorherigen Ansprüche,
   **dadurch gekennzeichnet,**
   **dass** das filmbildende Mittel Carboxylgruppen enthält und vorzugsweise eine Säurezahl von 10 bis 100 mg KOH/g Bindemittel, besonders bevorzugt von 40 bis 80 mg KOH/g Bindemittel, sowie vorzugsweise Molekulargewichte von 500 bis 5000 g/mol aufweisen.

8. Beschichtungszusammensetzung nach einem der vorherigen Ansprüche,

**dadurch gekennzeichnet,**
**daß** die Beschichtungszusammensetzung maximal 10 Gew.-% mit wenigstens einer Korrosionsschutzschicht versehene Aluminiumpigmente, bezogen auf das Gesamtgewicht der Beschichtungszusammensetzung, enthält.

9. Beschichtungszusammensetzung nach einem der vorherigen Ansprüche,
**dadurch gekennzeichnet,**
**daß** das Verhältnis der Gewichtsanteile von mit wenigstens einer Korrosionsschutzschicht versehenen Aluminiumpigmenten zu filmbildendem Mittel in der Beschichtungszusammensetzung 1:1 bis 1:10 beträgt.

10. Beschichtungszusammensetzung nach einem der vorherigen Ansprüche,
**dadurch gekennzeichnet,**
**daß** das Verhältnis der Gewichtsanteile von mit Korrosionsschutzschicht versehenen Aluminiumpigmenten zu filmbildendem Mittel in der Beschichtungszusammensetzung 1:3 bis 1:6 beträgt.

11. Beschichtungszusammensetzung nach einem der vorherigen Ansprüche,
**dadurch gekennzeichnet,**
**daß** der Feststoffgehalt der Beschichtungszusammensetzung in einem Bereich von 8 bis 40 Gew.-% liegt.

12. Beschichtungszusammensetzung nach einem der vorherigen Ansprüche,
**dadurch gekennzeichnet,**
**daß** die Beschichtungszusammensetzung nach Aufbringung und Trocknung auf einem Substrat einen hochglänzenden, strukturlosen, metallischerscheinenden Überzug ausbildet.

13. Beschichtungszusammensetzung nach einem der vorherigen Ansprüche,
**dadurch gekennzeichnet,**
**daß** die Beschichtungszusammensetzung weitere anorganische und/oder organische Farbpigmente und/oder Farbstoffe enthält.

14. Beschichtungszusammensetzung nach einem der vorherigen Ansprüche,
**dadurch gekennzeichnet,**
**daß** die Beschichtungszusammensetzung weitere Effektpigmente enthält.

15. Beschichtungszusammensetzung nach einem der vorherigen Ansprüche,
**dadurch gekennzeichnet,**
**daß** die Beschichtungszusammensetzung weitere Zusatzstoffe wie Füllstoffe, Reaktivverdünner, UV-Absorber, Lichtschutzmittel, Radikalfänger, Photoinitiatoren oder -Coinitiatoren, Vernetzungsmittel, Entlüftungsmittel, Slipadditive, Inhibitoren, Entschäumungsmittel, Emulgatoren, Netz- und Dispergiermittel, Haftvermittler, Verlaufmittel, filmbildende Hilfsmittel, Verdicker, Flammschutzmittel, Sikkative, Trocknungsmittel, Hautverhinderungsmittel, Korrosionsinhibitoren, Korrosionsschutzpigmente, Wachse und/oder Kombinationen dieser Zusatzstoffe enthält.

16. Beschichtungszusammensetzung nach Anspruch 15,
**dadurch gekennzeichnet,**
**daß** die Korrosionsschutzpigmente aus der Gruppe ausgewählt werden, die aus Strontium-Zink-Phosphosilikat, Zink-Aluminium-Polyphosphathydrat, Zink-Calcium-Aluminium-Strontium-Phosphatsilikathydrat, Zink-Calcium-Strontium-Orthophosphatsilikat, Strontium-Aluminium-Polyphosphathydrat, Calcium-Aluminium-Polyphosphatsilikathydrat, Natrium- und/oder Calcium- und/oder Zink-Molybdat oder Phospho-Molybdat, Zinkphosphatkomplex und Mischungen davon besteht.

17. Verfahren zur Herstellung einer Beschichtungszusammensetzung nach einem der Ansprüche 1 bis 15, das folgende Schritte umfasst:

(a) Verformen von Aluminiumpartikeln unter Verwendung eines Mahlwerks in Gegenwart von Flüssigphase und Schmierstoffen sowie Mahlkörpern, wobei die Mahlkörper ein Einzelgewicht von 2 bis 13 mg aufweisen, über einen Zeitraum von wenigstens 15 Stunden zu Aluminiumpigmenten,
(b) Nasschemisches Beschichten der im Schritt (a) hergestellten Aluminiumpigmente mit wenigstens einer $SiO_2$-Schicht unter Verwendung eines Sol-Gel-Verfahrens,
(c) Vermengen der im Schritt (b) beschichteten Aluminiumpigmente mit wenigstens einem filmbildenden Mittel und einer Flüssigphase unter Bereitstellung der Beschichtungszusammensetzung.

**18.** Verfahren nach Anspruch 17,
**dadurch gekennzeichnet,**
**daß** die Mahlkörper ein Einzelgewicht von 5,0 bis 12 mg aufweisen.

**19.** Verfahren nach Anspruch 17 oder 18,
**dadurch gekennzeichnet,**
**daß** die Aluminiumpigmente nach der Verformung in Schritt (a) in einem weiteren Schritt einer Größenklassifikation unterzogen werden.

**20.** Verfahren nach einem der Ansprüche 17 bis 19,
**dadurch gekennzeichnet,**
**daß** im Schritt (a) beim Verformen der Aluminiumpartikel als Flüssigphase organisches Lösemittel, vorzugsweise Testbenzin, Solventnaphtha, Isopropanol, Alkohole, Ketone oder Mischungen davon, verwendet wird.

**21.** Verfahren nach einem der Ansprüche 17 bis 20,
**dadurch gekennzeichnet,**
**daß** die in Schritt (b) bereitgestellten beschichteten Aluminiumpigmente vor Schritt (c) in eine pastöse Form überführt und nachfolgend in Schritt (c) in einer Flüssigphase und gegebenenfalls filmbildenden Mittel dispergiert werden.

**22.** Verfahren nach Anspruch 21,
**dadurch gekennzeichnet,**
**daß** die Flüssigphase organische Lösemittel, wässrige organische Lösemittel oder Wasser umfasst.

**23.** Verfahren nach einem der Ansprüche 17 bis 22,
**dadurch gekennzeichnet,**
**daß** die in Schritt (a) verwendeten Aluminiumpartikel vorverformter Aluminiumgrieß sind.

**24.** Verwendung einer Beschichtungszusammensetzung nach einem der Ansprüche 1 bis 16 in hochglänzenden Coatings, wie Automobillacken, Reparaturlackierungen, Industrielackierungen, Lackierungen von Kunststoffen, Holz oder Glas.

**25.** Beschichteter Gegenstand,
**dadurch gekennzeichnet,**
**daß** der Gegenstand mit einer Beschichtungszusammensetzung nach einem der Ansprüche 1 bis 16 beschichtet ist.

**Claims**

**1.** An aqueous coating composition, comprising at least one water-compatible film-forming agent and aluminium pigments that are provided with at least one inorganic anti-corrosion layer, **characterized in that** the thickness of said aluminium pigments provided with at least one inorganic anti-corrosion layer averages 50 to 90 nm, the inorganic anti-corrosion layer being an $SiO_2$ layer with a layer thickness of 3 to 20 nm.

**2.** An aqueous coating composition according to claim 1, **characterized in that** the aspect ratio, which is calculated from the ratio of the average longitudinal extent to the average thickness, of said aluminium pigments provided with at least one inorganic anti-corrosion layer is more than 120.

**3.** An aqueous coating composition according to any one of the preceding claims, **characterized in that** the aspect ratio, which is calculated from the ratio of the average longitudinal extent to the average thickness, of said aluminium pigments provided with at least one inorganic anti-corrosion layer is more than 200.

**4.** A coating composition according to any one of the preceding claims, **characterized in that** the silicon dioxide surface is preferably coated with silanes.

**5.** A coating composition according to any one of the preceding claims, **characterized in that** the proportion of the anti-corrosion layer is less than 20% by weight, based on the total weight of the aluminium pigments that are provided with said anti-corrosion layer.

6. A coating composition according to any one of the preceding claims, **characterized in that** the film-forming agent is selected from the group consisting of polyurethanes, polyamides, polyureas, melamine resins, polyimides, polyacrylates, polymethacrylates, epoxy resins, polyethers, polyesters, and mixtures thereof.

7. A coating composition according to any one of the preceding claims, **characterized in that** the film-forming agent contains carboxyl groups and preferably has an acid value of from 10 to 100 mg KOH/g of binding agent, particularly preferably of 40 to 80 mg KOH/g of binding agent and also preferably has molecular weights ranging from 500 to 5000 g/mol.

8. A coating composition according to any one of the preceding claims, **characterized in that** the coating composition contains not more than 10% by weight of aluminium pigments that are provided with at least one anti-corrosion layer, based on the total weight of the coating composition.

9. A coating composition according to any one of the preceding claims, **characterized in that t**he ratio by weight of aluminium pigments that are provided with at least one anti-corrosion layer to film-forming agent in the coating composition is from 1:1 to 1:10.

10. A coating composition according to any one of the preceding claims, **characterized in that** the ratio by weight of aluminium pigments that are provided with anti-corrosion layer to film-forming agent in the coating composition is from 1:3 to 1:6.

11. A coating composition according to any one of the preceding claims, **characterized in that** the solids content of the coating composition ranges from 8 to 40% by weight.

12. A coating composition according to any one of the preceding claims, **characterized in that** the coating composition produces, following application and drying on a substrate, a high-gloss, structureless, metallic-looking coating.

13. A coating composition according to any one of the preceding claims, **characterized in that** the coating composition contains additional inorganic and/or organic colored pigments and/or dyes.

14. A coating composition according to any one of the preceding claims, **characterized in that** the coating composition contains additional effect pigments.

15. A coating composition according to any one of the preceding claims, **characterized in that** the coating composition contains further additives such as fillers, reactive diluents, UV absorbers, light-stabilizing agents, free-radical scavengers, photoinitiators and coinitiators, crosslinking agents, de-aerating agents, slip additives, inhibitors, defoaming agents, emulsifiers, wetting and dispersing agents, adhesion promoters, leveling agents, film-forming aids, thickeners, flameproofing agents, liquid driers, drying agents, antiskinning agents, corrosion inhibitors, anti-corrosive pigments, waxes, and/or combinations of said additives.

16. A coating composition according to claim 15,
**characterized in that** the anti-corrosive pigments are selected from the group consisting of strontium zinc phosphosilicate, zinc aluminium polyphosphate hydrate, zinc calcium aluminium strontium phosphate silicate hydrate, zinc calcium strontium orthophosphate silicate, strontium aluminium polyphosphate hydrate, calcium aluminium polyphosphate silicate hydrate, sodium molybdate, calcium molybdate, zinc molybdate, sodium phosphomolybdate, calcium phosphomolybdate, zinc phosphomolybdate, zinc phosphate complex, and mixtures thereof.

17. A process for the production of a coating composition according to any one of claims 1 to 15, which comprises the following steps:

    (a) shaping aluminium particles using a grinding mill in the presence of a liquid phase and lubricants and grinding elements each grinding element individually weighing from 2 to 13 mg, over a period of at least 15 hours to form aluminium pigments,
    (b) coating the aluminium pigments produced in step (a) with at least one $SiO_2$ layer using a sol-gel method by a wet-chemical process, and
    (c) mixing the aluminium pigments coated in step (b) with at least one film-forming agent and a liquid phase to yield the coating composition.

18. A process according to claim 17, **characterized in that** the grinding elements each weigh from 5.0 to 12 mg.

19. A process according to claim 17 or 18, **characterized in that** the aluminium pigments, following shaping thereof in step (a), are subjected to size classification in an additional step.

20. A process according to any one of claims 17 to 19, **characterized in that** the liquid phase used in step (a) during shaping of the aluminium particles is an organic solvent, preferably white spirit, solvent naphtha, isopropanol, alcohols, ketones or mixtures thereof.

21. A process according to any one of claims 17 to 20, **characterized in that** the coated aluminium pigments provided in step (b) are converted to a pasty form prior to step (c) followed by dispersion thereof in step (c) in a liquid phase and if appropriate film-forming agent.

22. A process according to claim 21, **characterized in that** the liquid phase comprises organic solvents, aqueous organic solvents, or water.

23. A process according to any one of claims 17 to 22, **characterized in that** the aluminium particles used in step (a) consist of preshaped aluminium shot.

24. The use of a coating composition according to any one of claims 1 to 16 in high-gloss coatings, such as car varnishes, repair coatings, industrial coatings, coatings of plastics, wood or glass.

25. A coated article, **characterized in that** the article is coated with a coating composition according to any one of claims 1 to 16.

**Revendications**

1. Composition de revêtement aqueuse qui contient au moins un agent filmogène compatible avec l'eau et un pigment d'aluminium pourvu d'au moins une couche inorganique de protection contre la corrosion,
   **caractérisée en ce**
   **que** l'épaisseur du pigment d'aluminium, pourvu d'au moins une couche inorganique de protection contre la corrosion, est en moyenne de 50 à 90 nm, la couche inorganique de protection contre la corrosion étant une couche de $SiO_2$ ayant une épaisseur de couche de 3 à 20 nm.

2. Composition de revêtement aqueuse selon la revendication 1,
   **caractérisée en ce**
   **que** le facteur de forme, qui se calcule à partir du rapport de la dilatation longitudinale moyenne à l'épaisseur moyenne du pigment d'aluminium, pourvu d'au moins une couche inorganique de protection contre la corrosion, est de plus de 120.

3. Composition de revêtement aqueuse selon l'une quelconque des revendications précédentes,
   **caractérisée en ce**
   **que** le facteur de forme, qui se calcule à partir du rapport de la dilatation longitudinale moyenne à l'épaisseur moyenne du pigment d'aluminium, pourvu d'au moins une couche inorganique de protection contre la corrosion, est de plus de 200.

4. Composition de revêtement selon l'une quelconque des revendications précédentes,
   **caractérisée en ce**
   **que** la surface de dioxyde de silicium est revêtue, de préférence, de silanes.

5. Composition de revêtement selon l'une quelconque des revendications précédentes,
   **caractérisée en ce**
   **que** la proportion de la couche de protection contre la corrosion est de moins de 20 % en poids, par rapport au poids total des pigments d'aluminium pourvus de la couche de protection contre la corrosion.

6. Composition de revêtement selon l'une quelconque des revendications précédentes,
   **caractérisée en ce**

**que** l'agent filmogène est sélectionné parmi le groupe se composant des polyuréthannes, des polyamides, des polyurées, des résines de mélamine, des polyimides, des polyacrylates, des polyméthacrylates de méthyle, des résines époxydes, des polyéthers, des polyesters et de mélanges de ces derniers.

7. Composition de revêtement selon l'une quelconque des revendications précédentes, **caractérisée en ce** **que** l'agent filmogène contient des groupements carboxyles et présente un indice d'acide de 10 à 100 mm de KOH/g de liant, en particulier, de préférence, de 40 à 80 mg de KOH/g de liant ainsi que, de préférence, des poids moléculaires de 500 à 5000 g/moles.

8. Composition de revêtement selon l'une quelconque des revendications précédentes, **caractérisée en ce** **que** la composition de revêtement contient au maximum 10 % en poids de pigments d'aluminium, pourvus d'au moins une couche de protection contre la corrosion, par rapport au poids total de la composition de revêtement.

9. Composition de revêtement selon l'une quelconque des revendications précédentes, **caractérisée en ce** **que** le rapport des proportions pondérales des pigments d'aluminium pourvus d'au moins une couche de protection contre la corrosion, à l'agent filmogène, est de 1:1 à 1:10 dans la composition de revêtement.

10. Composition de revêtement selon l'une quelconque des revendications précédentes, **caractérisée en ce** **que** le rapport des proportions pondérales des pigments d'aluminium pourvus d'au moins une couche de protection contre la corrosion à l'agent filmogène, est de 1:3 à 1:6 dans la composition de revêtement.

11. Composition de revêtement selon l'une quelconque des revendications précédentes, **caractérisé en ce** **que** la teneur en matières solides de la composition de revêtement se situe dans un domaine de 8 à 40 % en poids.

12. Composition de revêtement selon l'une quelconque des revendications précédentes, **caractérisée en ce** **que** la composition de revêtement, après application et séchage sur un substrat, forme un revêtement d'aspect métallique, sans structure, à brillance élevée.

13. Composition de revêtement selon l'une quelconque des revendications précédentes, **caractérisée en ce** **que** la composition de revêtement contient des pigments colorés et/ou des colorants inorganiques et/ou organiques.

14. Composition de revêtement selon l'une quelconque des revendications précédentes, **caractérisée en ce** **que** la composition de revêtement contient d'autres pigments à effet.

15. Composition de revêtement selon l'une quelconque des revendications précédentes, **caractérisée en ce** **que** la composition de revêtement contient des additifs supplémentaires comme des charges, des diluants réactifs, des agents absorbeurs de la lumière UV, des agents de protection contre la lumière, des capteurs de radicaux, des agents photo amorceurs ou co-amorceurs, des agents de réticulation, des agents de ventilation, des additifs de glissement, des agents inhibiteurs, des agents anti-mousse, des émulsifiants, des agents mouillants et des agents de mise en dispersion, des agents promoteurs de l'adhésion, des agents nivelants, des adjuvants filmogènes, des agents épaississants, des agents ignifuges, des agents siccatifs, des agents de séchage, des agents d'empêchement de formation de peau, des agents inhibiteurs de la corrosion, des pigments de protection contre la corrosion, des cires et/ou des combinaisons de ces additifs.

16. Composition de revêtement selon la revendication 15, **caractérisée en ce** **que** les pigments de protection contre la corrosion sont sélectionnés parmi le groupe qui se compose de phosphosilicate de strontium-zinc, d'hydrate de polyphosphate de zinc-aluminium, d'hydrate de phosphates-silicates de zinc-calcium-aluminium-strontium, d'orthophosphate-silicates de zinc-calcium-strontium, d'hydrate de polyphosphate de strontium-aluminium, d'hydrate de polyphosphate-silicate de calcium-aluminium, de molybdate ou de phospho-molybdate de sodium et/ou de calcium et/ou de zinc, de complexe de phosphate de zinc et de mélanges de ces derniers.

**17.** Procédé en vue de la fabrication d'une composition de revêtement selon l'une quelconque des revendications 1 à 16, qui comprend les étapes suivantes :

(a) la déformation de particules d'aluminium par utilisation d'un dispositif de mouture en présence d'une phase fluide et de graisses lubrifiantes ainsi que de corps de mouture, les corps de mouture présentant un poids individuel de 2 à 13 mg, pendant une période de temps d'au moins 15 heures, pour former des pigments d'aluminium,
(b) le revêtement par voie de chimie humide des pigments d'aluminium fabriqués dans l'étape (a) à l'aide d'au moins une couche de SiO$_2$ par utilisation d'un procédé sol-gel,
(c) le mélange des pigments d'aluminium revêtus dans l'étape (b) à l'aide d'au moins un agent filmogène et d'une phase fluide sous mise en apprêt de la composition de revêtement.

**18.** Procédé selon la revendication 17,
**caractérisé en ce**
**que** les corps de mouture présentent un poids individuel de 5,0 à 12 mg.

**19.** Procédé selon la revendication 17 ou la revendication 18,
**caractérisé en ce**
**que** les pigments d'aluminium sont soumis après la déformation dans l'étape (a), dans une étape supplémentaire, à une classification en terme de tailles.

**20.** Procédé selon l'une quelconque des revendications 17 à 19,
**caractérisé en ce**
**que** l'on utilise, dans l'étape (a), lors de la déformation des particules d'aluminium, en tant que phase fluide un solvant organique, de préférence, du white spirit, de l'essence de naphta, de l'isopropanol, des alcools, des cétones ou des mélanges de ces derniers.

**21.** Procédé selon l'une quelconque des revendications 17 à 20,
**caractérisé en ce**
**que** les pigments d'aluminium revêtus, apprêtés dans l'étape (b), sont convertis, avant l'étape (c), en une forme pâteuse et sont ensuite mis en dispersion dans l'étape (c) dans une phase fluide et, le cas échéant, dans un agent filmogène.

**22.** Procédé selon la revendication 21,
**caractérisé en ce**
**que** la phase fluide comprend des solvants organiques, des solvants organiques aqueux ou de l'eau.

**23.** Procédé selon l'une quelconque des revendications 17 à 22,
**caractérisé en ce**
**que** les particules d'aluminium utilisées dans l'étape (a) sont sous forme de poudre d'aluminium préformée.

**24.** Utilisation d'une composition de revêtement selon l'une quelconque des revendications 1 à 16 dans des revêtements à brillance élevée, comme des vernis automobiles, des peintures laquées de réparation, des peintures laquées industrielles, des peintures laquées de matières plastiques, de bois ou de verre.

**25.** Article revêtu,
**caractérisé en ce**
**que** l'article est revêtu à l'aide d'une composition de revêtement selon l'une quelconque des revendications 1 à 16.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10100195 A1
- EP 0451785 B2
- EP 1621586 A
- EP 305560 A
- WO 0181483 A1
- DE 19635085
- EP 0259592 A
- US 2885366 A
- US 3954496 A
- EP 0678561 A
- DE 19501307
- EP 0708155 A
- EP 0104075 A
- US 5480481 A
- EP 0583919 A
- US 4693469 A
- EP 0477433 A
- US 4808231 A
- US 5215579 A
- EP 0848735 A
- EP 1116756 A

**In der Beschreibung aufgeführte Nicht-Patentliteratur**

- **J. SEUBERT ; A. FETZ.** PVD Aluminium Pigments: Superior Brillance for Coatings and Graphic Arts. *Coatings Journal,* Juli 2001, vol. 84 (A6), 225-264240-245
- **A. KIEHL ; K. GREIWE.** Encapsulated Aluminium Pigments. *Progress in Organic Coatings,* 1999, vol. 37, 179
- **A.B.J. RODRIGUEZ.** *JOCCA,* 1992, vol. 4, 150-153